# EUROPEAN PATENT SPECIFICATION

(11) **EP 4 111 722 B1**
(45) Date of publication and mention of the grant of the patent: **11.11.2026**
(21) Application number: 21779295.1
(22) Date of filing: 30.03.2021
(51) Int. Cl.: H04W 12/041, H04W 12/043, H04W 12/06, H04W 12/69, H04W 12/37

(54) **METHOD AND APPARATUS FOR PROVIDING AKMA SERVICE IN WIRELESS COMMUNICATION SYSTEM**
VERFAHREN UND VORRICHTUNG ZUR BEREITSTELLUNG EINES AKMA-DIENSTES IN EINEM DRAHTLOSEN KOMMUNIKATIONSSYSTEM
PROCÉDÉ ET APPAREIL DE FOURNITURE D'UN SERVICE AKMA DANS UN SYSTÈME DE COMMUNICATION SANS FIL

(30) Priority: 30.03.2020 IN 202041014023; 26.03.2021 IN 202041014023
(43) Date of publication of application: 04.01.2023
(73) Proprietor: Samsung Electronics Co., Ltd., Gyeonggi-do 16677 (KR)
(72) Inventor: RAJADURAI, Rajavelsamy, Gyeonggi-do, 16677 (KR); TIWARI, Kundan, Gyeonggi-do, 16677 (KR); GUPTA, Varini, Gyeonggi-do, 16677 (KR); SASI, Nivedya Parambath, Gyeonggi-do, 16677 (KR); RAJENDRAN, Rohini, Gyeonggi-do, 16677 (KR)
(74) Representative: Gulde & Partner
(86) International application number: PCT/KR2021/003912
(87) International publication number: WO 2021/201558

(56) References cited:
- WO-A1-2020/006515
- ANONYMOUS: "3rd Generation Partnership Project; Technical Specification Group Services and System Aspects; Study on authentication and key management for applications based on 3GPP credential in 5G (Release 16)", vol. SA WG3, no. V16.0.0, 31 December 2019 (2019-12-31), pages 1 - 83, XP051841028, Retrieved from the Internet <URL:ftp://ftp.3gpp.org/Specs/archive/33_series/33.835/33835-g00.zip 33835-g00.docx> [retrieved on 20191231]
- "3rd Generation Partnership Project; Technical Specification Group Services and System Aspects; Authentication and key management for applications; based on 3GPP credential in 5G AKMA (Release 16)", no. V0.3.0, 27 March 2020 (2020-03-27), pages 1 - 12, XP051861205, Retrieved from the Internet <URL:ftp://ftp.3gpp.org/Specs/archive/33_series/33.535/33535-030.zip 33535-030.docx> [retrieved on 20200327]
- ZTE: "Adding UDM to the AKMA reference model", vol. SA WG3, no. e-meeting; 20200302 - 20200306, 21 February 2020 (2020-02-21), XP051854866, Retrieved from the Internet <URL:https://ftp.3gpp.org/tsg_sa/WG3_Security/TSGS3_98e/Docs/S3-200129.zip S3-200129-Adding UDM to AKMA reference model.doc> [retrieved on 20200221]
- ERICSSON: "pCR to TS 33.535: Optimization in AKMA key generation", 3GPP DRAFT; S3-200299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20200302 - 20200306, 21 February 2020 (2020-02-21), Mobile Competence Centre ; 650, route des Lucioles ; F-06921 Sophia-Antipolis Cedex ; France, XP051855035
- INTERDIGITAL: "Editorial corrections for TR 33.835", 3GPP DRAFT; S3-192521 CORRECTIONS FOR TR 33.835, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Wroclaw (PL); 20190826 - 20190830, 18 August 2019 (2019-08-18), Mobile Competence Centre ; 650, route des Lucioles ; F-06921 Sophia-Antipolis Cedex ; France, XP051776367
- SAMSUNG: "AKMA and Application Key Derivation", 3GPP DRAFT; S3-200171, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20200302 - 20200306, 21 February 2020 (2020-02-21), Mobile Competence Centre ; 650, route des Lucioles ; F-06921 Sophia-Antipolis Cedex ; France, XP051854908
- ERICSSON: "pCR to TS 33.535: Update of the AKMA procedures", 3GPP DRAFT; S3-200296, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20200302 - 20200306, 21 February 2020 (2020-02-21), Mobile Competence Centre ; 650, route des Lucioles ; F-06921 Sophia-Antipolis Cedex ; France, XP051855032

## Description

### [Technical Field]

The present disclosure relates generally to Authentication and Key Management for Applications (AKMA) service in a wireless communication system, and more particularly, to apparatus and method of generating application specific keys using the key derived from the network access authentication.

### [Background Art]

To meet the demand due to ever-increasing wireless data traffic after the commercialization of the 4th generation (4G) communication system, there have been efforts to develop an advanced 5th generation (5G) system or pre-5G communication system. For this reason, the 5G or pre-5G communication system is also called a beyond 4th-generation (4G) network communication system or post long term evolution (LTE) system. Implementation of the 5G communication system using ultra-frequency millimeter wave (mmWave) bands, e.g., 60 giga hertz (GHz) bands, is considered to attain higher data transfer rates. To reduce propagation loss of radio waves and increase a transmission range in the ultra-frequency bands, beamforming, massive multiple-input multiple-output (MIMO), Full Dimensional MIMO (FD-MIMO), array antenna, analog beamforming, and large-scale antenna techniques are under discussion. To improve system networks, technologies for advanced small cells, cloud Radio Access Networks (RANs), ultra-dense networks, device to device (D2D) communication, wireless backhaul, moving networks, cooperative communication, Coordinated Multi-Points (CoMP), reception-end interference cancellation and the like are also being developed in the 5G communication system. In addition, in the 5G system, an advanced coding modulation (ACM), e.g., hybrid frequency-shift keying (FSK) and quadrature amplitude modulation (QAM) (FQAM), sliding window superposition coding (SWSC), and an advanced access technology, e.g., filter bank multi carrier (FBMC), non-orthogonal multiple access (NOMA), and sparse code multiple access (SCMA), are being developed.

In the meantime, the Internet is evolving from a human-centered connectivity network where humans generate and consume information into an Internet of Things (IoT) network where distributed entities such as things transmit, receive and process information without human intervention. Internet of Everything (IoE) technologies combined with IoT, such as big data processing technologies through connection with a cloud server, for example, have also emerged. To implement IoT, various technologies, such as a sensing technology, a wired/wireless communication and network infrastructure, a service interfacing technology, and a security technology are required, and recently, even technologies for sensor network, Machine to Machine (M2M), Machine Type Communication (MTC) for connection between things are being studied. Such an IoT environment may provide intelligent Internet Technology (IT) services that generate a new value to human life by collecting and analyzing data generated among connected things. IoT may be applied to a variety of areas, such as smart homes, smart buildings, smart cities, smart cars or connected cars, smart grids, health care, smart home appliances and advanced medical services through convergence and combination between existing Information Technologies (IT) and various industrial applications.

In this regard, various attempts to apply the 5G communication system to the IoT network are being made. For example, technologies regarding a sensor network, M2M, MTC, etc., are implemented by the 5G communication technologies, such as beamforming, MIMO, array antenna schemes, etc. Even application of a cloud Radio Access Network (cloud RAN) as the aforementioned big data processing technology may be viewed as an example of convergence of 5G and IoT technologies.

As described above, various services can be provided according to the development of a wireless communication system, and thus a method for easily providing such services is required.

3GPP Technical Report 33.835 (Version 16.0.0) represents a study on authentication and key management for applications based on 3GPP credential in 5G.

3GPP Technical Specification 33.535 (Version 0.3.0) relates to authentication and key management for applications based on 3GPP credential in 5G (AKMA).

### [Disclosure]

### [Technical Solution]

The present invention is defined in the independent claims. Preferred embodiments are defined in the dependent claims.

The disclosure relates to a method and an apparatus for deriving keys associated with AKMA services in a wireless communication system.

According to an embodiment, a method performed by an authentication and key management for applications (AKMA) anchor function (AAnF) entity is provided as defined in the appended claims.

### [Description of Drawings]

These and other features, aspects, and advantages of the present disclosure will become better understood when the following detailed description is read with reference to the accompanying drawings in which like characters represent like parts throughout the drawings, wherein:
Figure 1 illustrates Network Model for AKMA;
Figure 2 illustrates AKMA Key Hierarchy;
Figure 3a illustrates a method of initiating primary authentication, for a user-equipment (UE);
Figure 3b illustrates a method of generating application specific keys using the key derived from a network access re-authentication in accordance with Authentication and Key Management for Applications (AKMA) service in 3GPP;
Figure 3c illustrates message flow for solution alternative -1 for Re-authentication initiated by the UDM;
Figure 4 illustrates message flow for solution alternative -2 for Re-authentication initiated by the UDM, with indication to the UE to re-initiate the session establishment request after authentication procedure;
Figure 5 illustrates message flow for solution alternative -3 for Re-authentication initiated by the UDM directly to the AMF;
Figure 6 illustrates message flow for solution alternative -4 for Re-authentication initiated by the UE with the AMF;
Figure 7 illustrates message flow for solution alternative -1 for AKMA authorization check performed by AUSF;
Figure 8 illustrates message flow for solution alternative -2 for AKMA authorization check performed by UDM, requested by AUSF;
Figure 9 illustrates message flow for solution alternative -1 for AKMA authorization check performed by AAnF;
Figure 10 illustrates message flow for solution alternative -2 for AKMA authorization check performed by UDM, requested by AAnF;
Figure 11a illustrates a method of operation in accordance with Authentication and Key Management for Applications (AKMA) service in 3GPP;
Figure 11b illustrates message flow for AKMA key identifier derivation mechanism;
Figure 12 is a diagram illustrating a user equipment according to an embodiment of the disclosure; and
Figure 13 is a diagram illustrating a core network entity according to embodiments of the present disclosure.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present disclosure. Furthermore, in terms of the construction of the device, one or more components of the device may have been represented in the drawings by conventional symbols, and the drawings may show only those specific details that are pertinent to understand the embodiments of the present disclosure so as not to obscure the drawings with details that will be readily apparent to those of ordinary skill in the art having benefit of the description herein.

### [Mode for Invention]

Other technical features may be readily apparent to one skilled in the art from the following figures, descriptions, and claims.

Before undertaking descriptions below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

Hereinafter, for convenience of explanation, the disclosure uses terms and names defined in the 3rd generation partnership project long term evolution (3GPP LTE) standards. However, the disclosure is not limited to the terms and names, and may also be applied to systems following other standards.

In the disclosure, an evolved node B (eNB) may be interchangeably used with a next-generation node B (gNB) for convenience of explanation. That is, a base station (BS) described by an eNB may represent a gNB. In the following descriptions, the term "base station" refers to an entity for allocating resources to a user equipment (UE) and may be used interchangeably with at least one of a gNode B, an eNode B, a node B, a base station (BS), a radio access unit, a base station controller (BSC), or a node over a network. The term "terminal" may be used interchangeably with a user equipment (UE), a mobile station (MS), a cellular phone, a smartphone, a computer, or a multimedia system capable of performing communication functions. However, the disclosure is not limited to the aforementioned examples. In particular, the disclosure is applicable to 3GPP new radio (NR) (or 5th generation (5G)) mobile communication standards. In the following description, the term eNB may be interchangeably used with the term gNB for convenience of explanation. That is, a base station explained as an eNB may also indicate a gNB. The term UE may also indicate a mobile phone, NB-IoT devices, sensors, and other wireless communication devices.

For the purpose of promoting an understanding of the principles of the disclosure, reference will now be made to the embodiment illustrated in the drawings and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the embodiment is included in at least one embodiment of the present disclosure. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Unless otherwise defined, all technical and scientific terms used herein have the same meaning as commonly understood by one of ordinary skill in the art to which this disclosure belongs. The system, methods, and examples provided herein are illustrative only and not intended to be limiting.

Embodiments of the present disclosure will be described below in detail with reference to the accompanying drawings.

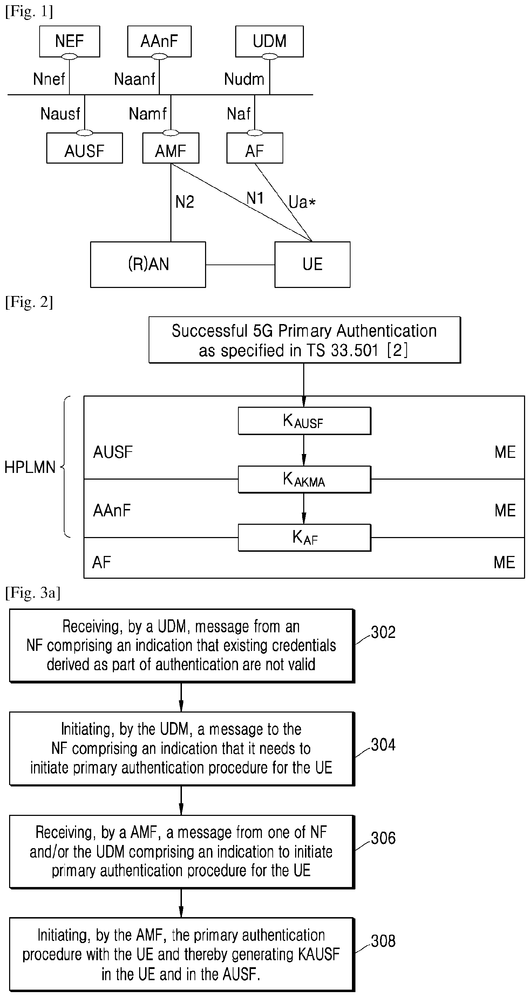

3GPP is currently specifying Authentication and Key Management for Applications (AKMA) service, as shown in Figure 1, a network service intended to support the authentication and key management based on 3GPP network access credentials in 5G system, for third-party and/or 3GPP applications and services. AKMA is essentially an authentication and key management service, where access to an application function/server and establishment of the secure interface between the UE and the application function (AF) is based on the established network access security credentials (established during primary authentication). The application provider (Application Function or Application Server) which uses AKMA, denoted by AF, delegates the authentication of the AF-user to the HPLMN. Therefore, service provider leverages the security credential provided by the MNO (HPLMN).

As shown in Figure 1, AAnF is the anchor function in the HPLMN that generates the key material to be used between the UE and the AF and maintains UE AKMA contexts to be used for subsequent bootstrapping requests. AAnF enables the AKMA anchor key (K_{AKMA}) derivation for AKMA service. Before invoking AKMA service, UE shall have successfully registered to the 5G core, which results in K_{AUSF} being stored at the AUSF and the UE after a successful 5G primary authentication [TS 33.535 v020].

Throughout this document, the term "Application Function" or "AKMA Application Function" are used interchangeably for the AKMA and Application key derivation procedures. The term "AF ID" indicates the AKMA Application Function ID, which is used as a parameter to identify the requested individual application to the 5GC network from the Application function. The term "Kaaf", "K_{AAF}" and "K_{AF}" is used interchangeably for indicating the Application function key which is derived from K_{AKMA}.

The key hierarchy as shown in Figure 2 includes the following keys: K_{AUSF}, K_{AKMA} and K_{AF}. K_{AUSF} is generated by AUSF as specified in TS 33.501.

Keys for AAnF:
K_{AKMA} is a key derived by ME and AUSF from K_{AUSF}.

Keys for AF:
K_{AF} is a key derived by ME and AAnF from K_{AKMA}.

AKMA key hierarchy describes a method for deriving a key K_{AKMA} at the UE and the AUSF. The AUSF sends K_{AKMA} to the anchor function. K_{AKMA} is equivalent to key Ks for GBA in TS 33.220. Both the AAnF and the UE shall use the K_{AKMA} to derive application specific keys needed for AKMA Application Functions (AFs).

The anchor key K_{AKMA} shall use the implicit lifetime and the application key K_{AF} shall use explicit lifetimes based on operator's policy as specified in [TS 33.535 v020]. The application key shall be provided with a maximum lifetime. When the application key lifetime is expired, it shall be re-negotiated. Once the application key is derived from the anchor key, it is necessary for the anchor function to notify the application function about the validity of the derived application key.

As the key K_{AKMA} is time limited, if the key lifetime expires then the AAnF makes the K_{AKMA} invalid. When the K_{AKMA} validity timer expires, then it is not clear how the UE and network calculate another K_{AKMA} In addition, as the key K_{AF} is time limited, if the key lifetime expires then the AF makes the K_{AF} invalid. When the UE request the AF, for an application session establishment, if the AF does not have the valid K_{AF}, and K_{AKMA} is not changed in the AAnF for the UE (that is current K_{AKMA} already used to derive K_{AF}), then AAnF should not provide the same key again with new lifetime. In this case, it is not clear how the UE and network calculate another K_{AkMA.}as to derive fresh K_{AF}. Further, the ongoing work does not consider a system and method to check the authorization of the UE and AF, whether there are authorised/subscribed to obtain the services. Still further, the ongoing work does not consider a system and method to generate K_{AKMA} ID, if authentication method other than AKA is used, for example, EAP-TLS.

Thus, there is a need for a solution that overcomes the above-mentioned deficiencies.

Figure 3a illustrates a method of initiating primary authentication, for a user-equipment (UE).

In step 302, the UDM may receive message from a network function (NF) comprising an indication that existing credentials derived as part of authentication are no longer valid. The NF may be at least one of: Access and Mobility Management Function (AMF), AKMA anchor function (AAnF), authentication server function (AUSF), application function (AF). The existing credentials may no longer be valid in the network function (NF) due to a) expiry of lifetime of the credentials, and b) loss of credentials due to network problems and/or constraints.

In step 304, the UDM may initiate a message to another NF comprising an indication that it needs to initiate primary authentication procedure for the UE. Such initiating by the UDM indication to initiate primary authentication further comprises determining and including an indication whether authentication to be performed is required immediately or delay is acceptable. It is determined by the UDM whether the authentication to be performed is required immediately or later (but, at the earliest) based on the request from another NF.

Further, in step 306, an Access and Mobility Management Function (AMF) may receive a message from one of another network function (NF) and/or the UDM comprising an indication to initiate primary authentication procedure for the UE.

In step 308, the AMF may initiate the primary authentication procedure with the UE, to derive new K_{AUSF} in the UE and in the AUSF.

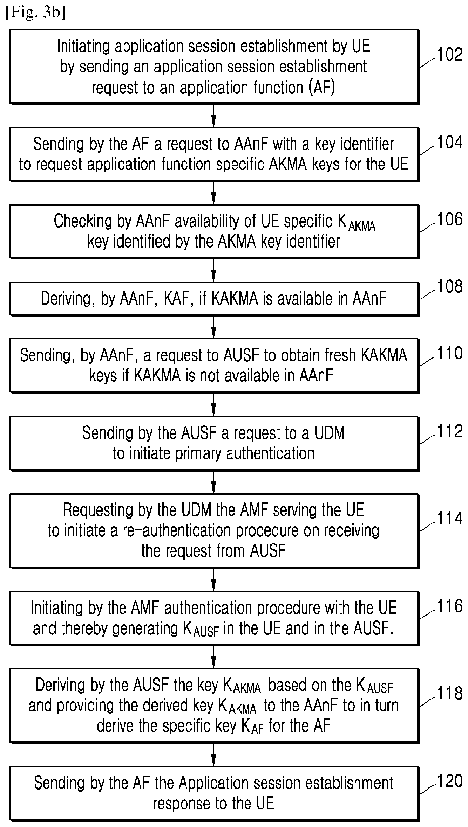

Figure 3b illustrates a method of generating application specific keys using the key derived from a network access re-authentication in accordance with Authentication and Key Management for Applications (AKMA) service in 3GPP.

In step 102, UE may initiate application session establishment by sending an application session establishment request to an application function (AF), wherein the request comprises one or more of: AKMA Key Id, GPSI and Routing ID.

In step 104, the AF may transmit a request to AAnF with a key identifier to request application function specific AKMA keys for the UE.

In step 106, AAnF may check availability of UE specific K_{AKMA} key identified by the AKMA key identifier.

In step 108, the AAnF may derive the AF specific AKMA key (K_{AF}) from K_{AKMA} if K_{AKMA} is available in AAnF and thereby responding to the AF with K_{AF}.

In step 110, the AAnF may transmit request to obtain the K_{AKMA} key specific to the UE if K_{AKMA} is not available with the AAnF or K_{AKMA} is already used for K_{AF} derivation for the requesting AF. The request from the AAnF to the AUSF comprises the AKMA key identifier and optionally an SUPI.

In step 112, the AUSF may transmit a request to a UDM to initiate primary authentication for the UE and include the SUPI of the UE in the request to the UDM.

In step 114, the UDM may request the AMF serving the UE to initiate a re-authentication procedure on receiving the request from AUSF.

In step 116, the AMF may initiate authentication procedure with the UE and thereby generate K_{AUSF} in the UE and in the AUSF.

In step 118, the AUSF may derive the key K_{AKMA} based on the K_{AUSF} and provide the derived key K_{AKMA} to the AAnF to in turn derive the specific key K_{AF} for the AF.

In step 120, the AF may transmit the Application session establishment response to the UE.

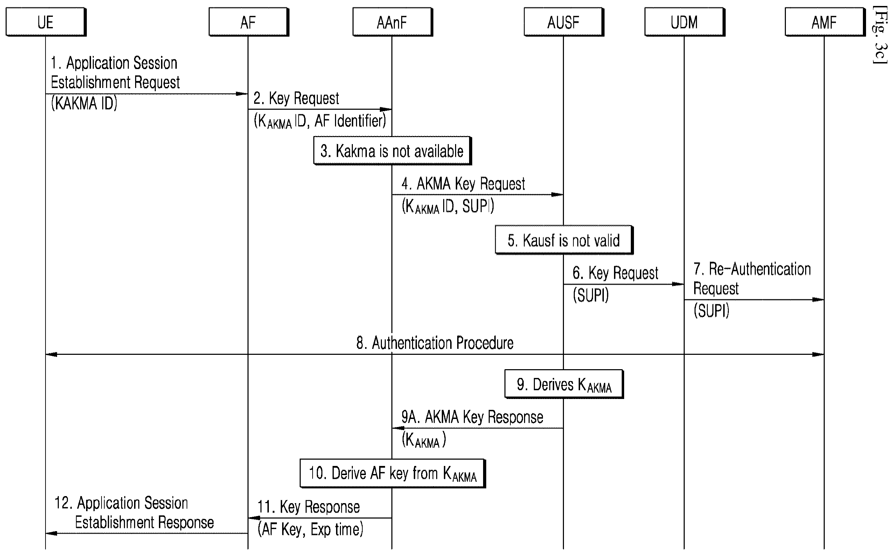

Figure 3c illustrates message flow for solution alternative -1 for Re-authentication initiated by the UDM in accordance with the description provided in Figure 3a.

Step 1: The UE initiates application session establishment by sending application session establishment request to the application function (AF). The UE includes at least one of the following parameters in the request message: AKMA Key Id, GPSI and Routing ID.
- The UE includes the Routing Indicator (RI) provisioned by the HPLMN, to identify appropriate AUSF (which is in possession of the key KAUSF) along with Home Network Identifier (HNI). In one example, this is same as Routing identity sent in the SUCI.
- The GPSI is UE's ID, which uniquely identify the UE in the AKMA service.

Step 2: If the AF does not have an active context associated with the key identifier, then the AF sends a request to AAnF with the key identifier to request application function specific AKMA keys for the UE. The AF also includes its identity (AF Id) in the request.

Step 3: On receiving the request from AF, if the AAnF is in possession of the AF specific key (K_{AF}), it responds to the AF with the K_{AF} key. If not, the AAnF shall check if it has the UE specific K_{AKMA} key identified by the AKMA key identifier.

If K_{AKMA} is available in AAnF, it shall derive the AF specific AKMA key (K_{AF}) from K_{AKMA} (Step 10) and respond to the AF with K_{AF} and lifetime (Step 11).

Step 4: If K_{AKMA} is not available or validity of the K_{AKMA} expired and/or K_{AF} for the AF was already derived from the current K_{AKMA}, the AAnF shall send a request to the AUSF to obtain the K_{AKMA} key specific to the UE. The AAnF may include the AKMA key identifier in the request and may include the SUPI if it has.

Step 5: On receiving the request from AAnF, if the AUSF is in possession of the UE specific key (K_{AUSF}) and no K_{AKMA} was derived from the K_{AUSF}, then the AUSF derives the K_{AKMA} using the K_{AUSF} and the AUSF may respond to the AAnF with the K_{AKMA} key. The AUSF stores association between the K_{AUSF} and corresponding K_{AKMA}. If K_{AUSF} is not available or already K_{AKMA} was derived from the current K_{AUSF} then the following steps are performed.

Step 6: If K_{AUSF} is not available (or validity of the K_{AUSF} expired or no valid K_{AUSF} is available or K_{AKMA} was derived from the current K_{AUSF}), then the AUSF sends a request to the UDM to initiate primary authentication for the UE. It includes the SUPI of the UE in the request.

In an embodiment, if the AUSF identifies that the K_{AUSF} is about to expire for a UE, then the AUSF initiates the authentication by itself (independent of the request from AAnF), by sending a request to the UDM or to the AMF to initiate primary authentication for the UE, to generate a fresh K_{AUSF} for the UE. The AUSF may indicate that the authentication to be performed immediately or later. Then the AMF initiates authentication procedure with the UE (based on the indication from the AUSF or from the UDM), as specified in the TS 33.501 (Initiation of authentication procedure and selection of authentication method), that is, the SEAF/AMF invokes the Nausf_UEAuthentication service by sending a Nausf_UEAuthentication_Authenticate Request message to the AUSF. The AUSF shall indicate to the SEAF/AMF in the Nausf_UEAuthentication _Authenticate Response whether the authentication was successful or not. K_{AUSF} is created in the AUSF and in the UE, when running a successful primary authentication. The AUSF stores the K_{AUSF} after the completion of the primary authentication.

Step 7: On receiving the request from AUSF, the UDM request the AMF serving the UE to initiate authentication procedure. Initiation of authentication procedure is provided by the AMF as part of service. For illustration, as a post service.

In an embodiment, the UDM may determine whether the authentication to be performed is required immediately or later based on the request from another NF.

For illustrative propose,
- in a case where the Unified Data Repository (UDR) loses the UE context (for example, due to hard restart), then the UDM may decide to perform fresh authentication procedure as to generate new UE context. In this case, the UDM may indicate to the AMF to perform the authentication at the earliest (for example, the AMF initiates the authentication procedure whenever the UE transit to Connected state).
- in a case where the K_{AUSF} is not available in the AUSF or already K_{AKMA} was derived from the current K_{AUSF} by the AUSF then the AUSF request the UDM to perform fresh authentication procedure, so as to generate a fresh K_{AUSF}. In this case, the UDM may indicate to the AMF to perform the authentication immediately.

In another embodiment, the requesting NF provides explicit indication whether the authentication is to be performed immediately or later.

Step 8: The AMF initiates authentication procedure with the UE, as specified in the TS 33.501 (Initiation of authentication procedure and selection of authentication method), that is, the SEAF/AMF invokes the Nausf_UEAuthentication service by sending a Nausf_UEAuthentication_Authenticate Request message to the AUSF. The AUSF shall indicate to the SEAF/AMF in the Nausf_UEAuthentication _Authenticate Response whether the authentication was successful or not.

Step 9: Once K_{AUSF} is generated as part of Step 8, the AUSF derives the key K_{AKMA} and provides the derived key K_{AKMA} to the AAnF in AKMA key response message.

Step 10: The AAnF derives the AF specific key K_{AF}

Step 11: The AAnF provides the derived key K_{AF} to the AF, along with the explicit lifetime.

Step 12: On receiving the application key response message from the AAnF, the AF sends the Application session establishment response to the UE.

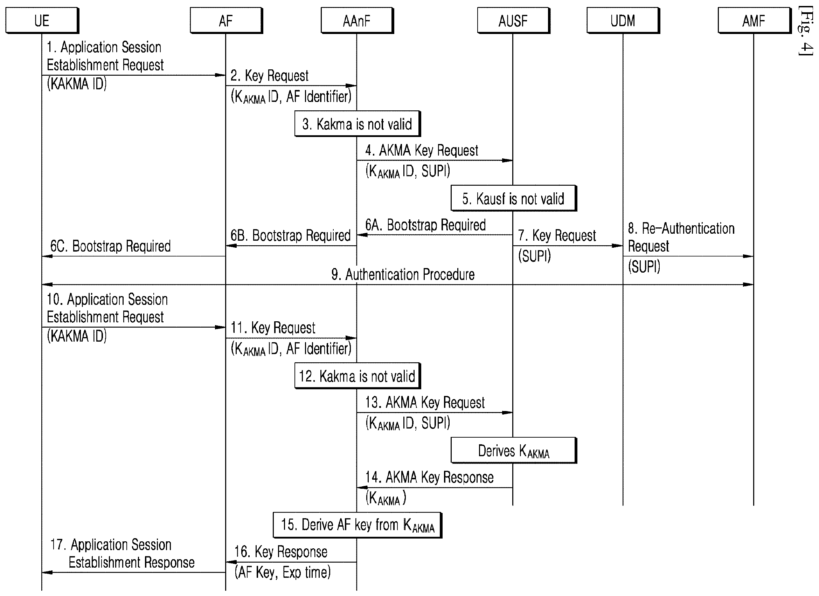

Figure 4 illustrates message flow for solution alternative-2 for Re-authentication initiated by the UDM, with indication to the UE to re-initiate the session establishment request after authentication procedure;

Step 1: The UE initiates application session establishment by sending application session establishment request to the application function (AF). The UE includes at least one of the following parameters in the request message: AKMA Key Id, GPSI and Routing ID.
- The UE includes the Routing Indicator (RI) provisioned by the HPLMN, to identify appropriate AUSF (which is in possession of the key KAUSF) along with Home Network Identifier (HNI).
- The GPSI is UE's ID, which uniquely identify the UE in the AKMA service.

Step 2: If the AF does not have an active context associated with the key identifier, then the AF sends a request to AAnF with the key identifier to request application function specific AKMA keys for the UE. The AF also includes its identity (AF Id) in the request.

Step 3: On receiving the request from AF, if the AAnF is in possession of the AF specific key (K_{AF}), it responds to the AF with the KAF key. If not, the AAnF shall check if it has the UE specific K_{AKMA} key identified by the AKMA key identifier.

If K_{AKMA} is available in AAnF, it shall derive the AF specific AKMA key (K_{AF}) from K_{AKMA} and respond to the AF with K_{AF} and lifetime.

In an embodiment, instead of the AAnF sending a request to the AUSF to obtain the K_{AKMA} key specific to the UE (Step 4), the AAnF may send the Bootstrapping of the K_{AUSF} key required message (Step 6B) to the UE directly. Optionally further, AAnF may indicate the UE needs to re-initiate the session establishment request after authentication procedure, taking the new parameters into account: new AKMA key ID, K_{AUSF}, like so.

Step 4: If K_{AKMA} is not available or validity of the K_{AKMA} is expired and/or K_{AF} for the AF was already derived from the current K_{AKMA}, the AAnF shall send a request to the AUSF to obtain the K_{AKMA} key specific to the UE. The AAnF includes the AKMA key identifier in the request and may include the SUPI if it has.

Step 5: On receiving the request from AAnF, if the AUSF is in possession of the UE specific key (K_{AUSF}), it responds to the AAnF with the K_{AKMA} key. If K_{AUSF} is not available (if K_{AUSF} is not available (or validity of the K_{AUSF} expired or no valid K_{AUSF} available), then the following steps are performed.

Step 6A-6C: The AUSF indicates that the Bootstrapping of the K_{AUSF} key is required to the AAnF and also to the UE and further, it indicates that the UE needs to re-initiate the session establishment request after successful completion of the authentication procedure, taking the new parameters into account: new AKMA key ID, K_{AUSF}, like so.

Step 7: Further, the AUSF sends a request to the UDM to initiate primary authentication for the UE. It includes the SUPI of the UE in the request.

Step 8: On receiving the request from AUSF, the UDM request the AMF serving the UE to initiate authentication procedure. Initiation of authentication procedure is provided by the AMF as part of service. For illustration, as a post service.

In an embodiment, the UDM may determine whether the authentication to be performed is required immediately or later based on the request from another NF and include the indication in the request to the AMF.

For illustrative propose,
- in a case where the Unified Data Repository (UDR) loses the UE context (for example, due to hard restart), then the UDM may decide to perform fresh authentication procedure as to generate new UE context. In this case, the UDM may indicate to the AMF to perform the authentication at the earliest (for example, the AMF initiates the authentication procedure whenever the UE transit to Connected state).
- in a case where the K_{AUSF} is not available in the AUSF or already K_{AKMA} was derived from the current K_{AUSF} by the AUSF then the AUSF may request the UDM to perform the authentication procedure, as to generate a fresh K_{AUSF}. In this case, the UDM may indicate to the AMF to perform the authentication immediately.

In another embodiment, the requesting NF provides explicit indication whether the authentication to be performed immediately or later to the UDM and the UDM includes the indication in the request to the AMF.

Step 9: The AMF initiates authentication procedure with the UE, as specified in the TS 33.501 (Initiation of authentication procedure and selection of authentication method), that is, the SEAF/AMF invokes the Nausf_UEAuthentication service by sending a Nausf_UEAuthentication_Authenticate Request message to the AUSF. The AUSF shall indicate to the SEAF/AMF in the Nausf_UEAuthentication _Authenticate Response whether the authentication was successful or not.

Step 10: The UE initiates application session establishment by sending application session establishment request to the application function again, considering the new parameters. The UE includes at least one of the following parameters in the request message: AKMA Key Id, GPSI and Routing ID.

Step 11-17: Normal AKMA procedure is followed. If the AF does not have an active context associated with the key identifier, then in step 11, the AF sends a request to AAnF with the key identifier to request application function specific AKMA keys for the UE. The AF also includes its identity (AF Id) in the request. The AAnF shall check whether the AAnF can provide the service to the AF by checking the AF Id. If succeeds, the following procedures is executed. Otherwise, the AAnF shall reject the procedure.

If the AAnF is in possession of the AF specific key (K_{AF}), it responds to the AF with the K_{AF} key. If not, the AAnF shall check if it has the UE specific K_{AKMA} key identified by the AKMA key identifier.

If K_{AKMA} is available in AAnF, it shall derive the AF specific AKMA key (K_{AF}) from K_{AKMA} and respond to the AF with K_{AF} and lifetime.

If K_{AKMA} is not available (step 12), in step 13, the AAnF shall send a request to the AUSF to obtain the K_{AKMA} key specific to the UE. It includes the AKMA key identifier in the request.

In step 14, the AUSF shall respond with the K_{AKMA} key identified by the key identifier.

In step 15, the AAnF derives the AF specific key (K_{AF}) from K_{AKMA} and in step 16, the AAnF responds to the AF with K_{AF} and lifetime.

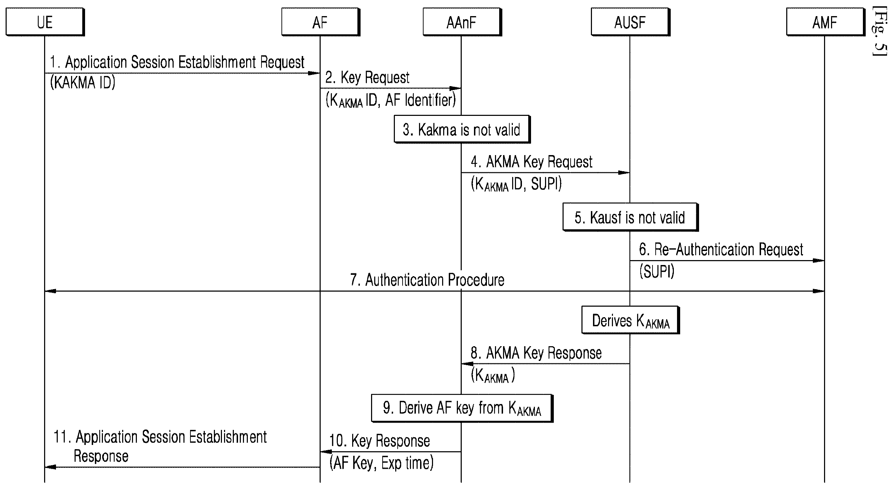

Figure 5 illustrates message flow for solution alternative-3 for Re-authentication initiated by the AUSF directly to the AMF;
Step 1: The UE initiates application session establishment by sending application session establishment request to the application function. The UE includes at least one of the following parameters in the request message: AKMA Key Id, GPSI, Routing ID.
   - The UE includes the Routing Indicator (RI) provisioned by the HPLMN, to identify appropriate AUSF (which is in possession of the key K_{AUSF}) along with Home Network Identifier (HNI).
   - The GPSI is UE's ID, which uniquely identify the UE in the AKMA service.
Step 2: If the AF does not have an active context associated with the key identifier, then the AF sends a request to AAnF with the key identifier to request application function specific AKMA keys for the UE. The AF also includes its identity (AF Id) in the request.
Step 3: On receiving the request from AF, if the AAnF is in possession of the AF specific key (K_{AF}), it responds to the AF with the K_{AF} key. If not, the AAnF shall check if it has the UE specific K_{AKMA} key identified by the AKMA key identifier.

If K_{AKMA} is available in AAnF, it shall derive the AF specific AKMA key (K_{AF}) from K_{AKMA} and respond to the AF with K_{AF} and lifetime.

Step 4: If K_{AKMA} is not available or validity of the K_{AKMA} expired and/or K_{AF} for the AF was already derived from the current K_{AKMA}, the AAnF shall send a request to the AUSF to obtain the K_{AKMA} key specific to the UE. It includes the AKMA key identifier in the request and may include the SUPI if it has. In an embodiment, AUSF supports a new service or service operation to receive KAKMA refresh request from AAnF.

Step 5: On receiving the request from AAnF, if the AUSF is in possession of the UE specific key (K_{AUSF}), it responds to the AAnF with the K_{AKMA} key. If K_{AUSF} is not available then the following steps are performed.

Step 6: If K_{AUSF} is not available (or validity of the K_{AUSF} expired or no valid K_{AUSF} available), then the AUSF sends a request to the AMF to initiate primary authentication with the UE. The AUSF may indicate that the authentication to be performed immediately or later. It includes the SUPI of the UE in the request. For AKMA, initiation of authentication procedure is provided by the AMF as part of a new service or service operation. For illustration, a post service. Alternatively, AUSF can send a notification to AMF on a notification endpoint registered by AMF in NRF as part of its NF-Profile.

For example, in a case where a lifetime of AKMA application key expires, the AF may invalidate the AKMA application key. When the AKMA application key is invalid, the AF may trigger re-keying of the AKMA application key. For example, the AF may request the AAnF to provide a new AKMA application key. In a case where a first AKMA anchor key stored in the AAnF is the same as a second AKMA anchor key, which is used to generate the invalid AKMA application key, the AAnF may request AUSF to generate a new AKMA anchor key. For generating the new AKMA anchor key, the AUSF may request the AMF to initiate the primary authentication thereby refreshing the expired AKMA application key based on the primary authenciation.

Step 7: On receiving the request from AUSF, the AMF initiates authentication procedure with the UE, as specified in the TS 33.501(Initiation of authentication procedure and selection of authentication method), that is, the SEAF/AMF invokes the Nausf_UEAuthentication service by sending a Nausf_UEAuthentication _Authenticate Request message to the AUSF. The AUSF shall indicate to the SEAF/AMF in the Nausf_UEAuthentication _Authenticate Response whether the authentication was successful or not.

Step 8: Once K_{AUSF} is generated as part of Step 7, the AUSF derives the key K_{AKMA} and provides the derived key K_{AKMA} to the AAnF in AKMA key response message.

Step 9: The AAnF derives the AF specific key K_{AF}

Step 10: The AAnF provides the derived key K_{AF} to the AF, along with the explicit time.

Step 11: On receiving the application key response message from the AAnF, the AF sends the Application session establishment response to the UE.

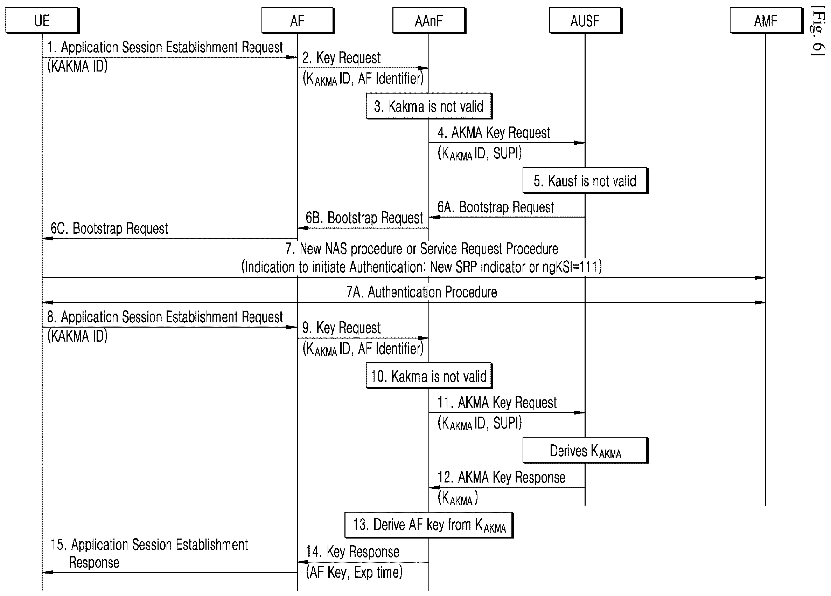

Figure 6 illustrates message flow for solution alternative-4 for Re-authentication initiated by the UE with the AMF;
Step 1: The UE initiates application session establishment by sending application session establishment request to the application function. The UE includes at least one of the following parameters in the request message: AKMA Key Id, GPSI and Routing ID.
   - The UE includes the Routing Indicator (RI) provisioned by the HPLMN, to identify appropriate AUSF (which is in possession of the key KAUSF) along with Home Network Identifier (HNI). In one example the Routing ID is same as the Routing ID sent in the SUCI.
   - The GPSI is UE's ID, which uniquely identify the UE in the AKMA service.
Step 2: If the AF does not have an active context associated with the key identifier, then the AF sends a request to AAnF with the key identifier to request application function specific AKMA keys for the UE. The AF also includes its identity (AF Id) in the request.
Step 3: On receiving the request from AF, if the AAnF is in possession of the AF specific key (K_{AF}), it responds to the AF with the K_{AF} key. If not, the AAnF shall check if it has the UE specific K_{AKMA} key identified by the AKMA key identifier.

If K_{AKMA} is available in AAnF, it shall derive the AF specific AKMA key (K_{AF}) from K_{AKMA} and respond to the AF with K_{AF} and lifetime.

Step 4: If K_{AKMA} is not available or validity of the K_{AKMA} expired and/or K_{AF} for the AF was already derived from the current K_{AKMA}, the AAnF shall send a request to the AUSF to obtain the K_{AKMA} key specific to the UE. It includes the AKMA key identifier in the request and may include the SUPI if it has.

In an embodiment, instead of the AAnF sending a request to the AUSF to obtain the K_{AKMA} key specific to the UE (Step 4), the AAnF may send the Bootstrapping of the K_{AUSF} key required message (Step 6B) to the UE directly. Optionally further, AAnF may indicate the UE needs to re-initiate the session establishment request after authentication procedure, taking the new parameters in to account: new AKMA key ID, K_{AUSF}, like so.

Step 5: On receiving the request from AAnF, if the AUSF is in possession of the UE specific key (K_{AUSF}), it responds to the AAnF with the K_{AKMA} key. If K_{AUSF} is not available (if K_{AUSF} is not available (or validity of the K_{AUSF} expired or no valid K_{AUSF} available), then the following steps are performed.

Step 6A-6C: The AUSF indicates that the Bootstrapping of the K_{AUSF} key is required to the AAnF and also to the UE and further, it indicates that the UE needs to re-initiate the session establishment request after authentication procedure, taking the new parameters in to account: new AKMA key ID, K_{AUSF}, like so.

Step 7: On receiving the bootstrapping request procedure, the UE initiates a Registration request procedure or service request procedure or PDU session establishment procedure or a new NAS procedure towards the AMF. The NAS message includes an indication or information (for example, new SRP indication (Authentication request)) and/or setting the Key Set Identifier in 5G (ngKSI) value as 111 so that, UE request triggers AMF to initiate new authentication procedure.

For example, in a case where a lifetime of AKMA application key expires, the AF may trigger a re-keying of the AKMA application key. Specifically, when the life time of the AKMA application key expires, the AF may reject an access from the UE to the AF. The UE may transmit, to the AMF, an indication which triggers the primary authentication via an existing of a new NAS message. After the primary authentication, a new AKMA application key may be generated via the re-keying of the AKMA application key and the UE may re-initiate request to access the AF.

Step 7A: On receiving the request from UE, the AMF initiates authentication procedure with the UE. The authentication procedure is performed as specified in the 3GPP TS 33.501.

Step 8: After completion of the successful authentication procedure, the UE initiates application session establishment by sending application session establishment request to the application function again, considering the new parameters. The UE includes at least one of the following parameters in the request message: AKMA Key Id, GPSI and Routing ID.

Step 9-15: Normal AKMA procedure is followed. If the AF does not have an active context associated with the key identifier, then in step 9, the AF sends a request to the AAnF with the AKMA key identifier to request the application function specific AKMA keys for the UE. The AF also includes its identity (AF Id) in the request.

The AAnF shall check whether the AAnF can provide the service to the AF by checking the AF Id. If succeeds, the following procedures is executed. Otherwise, the AAnF shall reject the procedure.

If the AAnF is in possession of the AF specific key (K_{AF}), it responds to the AF with the K_{AF} key (Step 14). If not, the AAnF shall check if it has the UE specific K_{AKMA} key identified by the AKMA key identifier.

If K_{AKMA} is available in AAnF, it shall derive the AF specific AKMA key (K_{AF}) from K_{AKMA} and respond to the AF with K_{AF} and lifetime (Step 14).

If K_{AKMA} is not available or validity of the K_{AKMA} expired and/or K_{AF} for the AF was already derived from the current K_{AKMA} (step 10), in step 11, the AAnF shall send a request to the AUSF to obtain the K_{AKMA} key specific to the UE. It includes the AKMA key identifier in the request.

In step 12, the AUSF shall respond with the KAKMA key identified by the key identifier.

In step 13, the AAnF derives the AF specific key (KAF) from KAKMA and in step 14, the AAnF responds to the AF with KAF and lifetime.

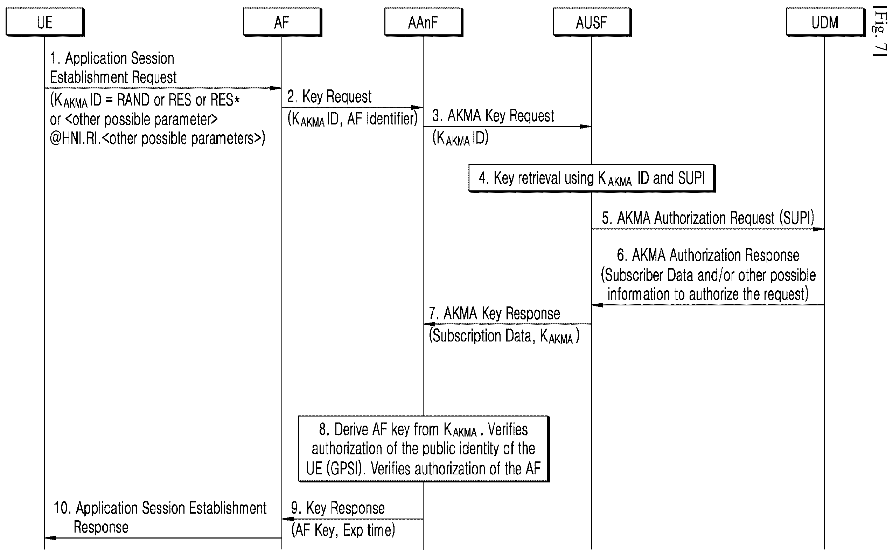

Figure 7 illustrates message flow for solution alternative -1 for AKMA authorization check performed by AUSF.

In an embodiment, the authorization of the UE to access the AKMA service and/or authorization of the AF to serve the UE and/or authorization of the AF to access the AKMA service is performed by the AUSF, using the subscription data and/or service profile of the UE and/or the allowed list of GPSI/AF received from the UDM.

Step 1-10: Illustrates the procedure for deriving AKMA Application key for a specific AF.

After Step-4, in step 5, the AUSF may request the UDM to provide the necessary information to check authorization of the UE and/or AF to use AKMA service.

In step 6, the UDM provides the service profile and/or the subscription data of the UE and/or allowed list GPSI(s) of the UE and/or allowed list of AF(s) that can serve the UE and/or list of AF that can use the AKMA service from the network and/or whether the UE is registered in 5GS to the AUSF.

The AUSF may perform authorization check of the UE based on the received information from the UDM (service profile and/or Subscription data and/or allowed list GPSI(s) of the UE and/or allowed list of AF(s) that can serve the UE and/or list of AF that can use the AKMA service from the network and/or whether the UE is registered in 5GS) and the request received from the AAnF.

If authorization check is performed by the AUSF, then the AUSF may proceed further only if the authorization check is successful, otherwise the AUSF rejects the request from the AAnF and AUSF sends appropriate error message to the AAnF and AAnF forwards it to the AF and may to the UE also.

In an embodiment, the AAnF authorises the AF (whether the AF is allowed to obtain the AKMA service) based on the configured local policy or based on the authorization information/policy provided by the NEF (for example, using Access Token).

For example, the AF may be an internal AF that directly communicates with the AAnF. Compared to an external AF which communicates with the AAnF via a network exposure function (NEF), the internal AF which is located inside an operation's network may communicate with the AAnF without the NEF.In a case where the AF request the AAnF to provide AKMA application key, the AF may perform authorization check by checking whether the AAnF provides AKMA service to the AF based on a local policy. For example, the local policy may be configured with list of application functions which can request and access AKMA services from the AAnF. Based on a result of the authorization check, the AAnF may determine whether to derive the AKMA application key. For example, if the authorization check succeeds, the AAnF may derive the AKMA application key. If the authorization check fails, the AAnF may reject the request from the AF.

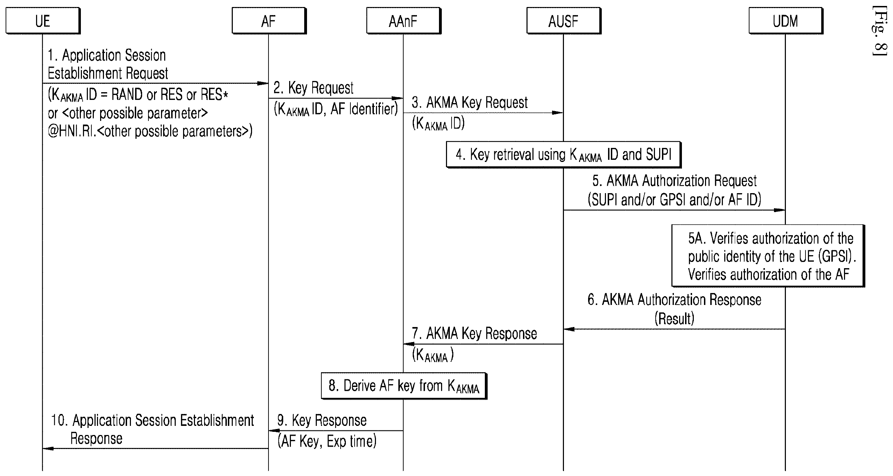

Figure 8 illustrates message flow for solution alternative -2 for AKMA authorization check performed by UDM, requested by AUSF.

In an embodiment, the authorization of the UE to access the AKMA service is performed by the UDM, based on the necessary information received from the AUSF.

In an embodiment, the authorization of the UE to access the AKMA service and/or authorization of the AF to server the UE and/or authorization of the AF to access the AKMA service is performed by the UDM, using the subscription data and/or service profile of the UE and/or the allowed list of GPSI/AF and/or whether the UE is registered in 5GS. The UDM provides the AKMA authorization check as a service to the AAnF, for example using GET method.

Step 1-10: Illustrates the procedure for deriving AKMA Application key for a specific AF. After Step 4, in step 5, the AUSF may request the UDM to perform authorization check by providing necessary input parameters, at least one of the following: SUPI, GPSI and AF ID.

On receiving the request, in step 5A, the UDM may perform authorization check on whether the UE and/or AF is authorised to use the AKMA feature, based on at least one of the stored information: the service profile, the subscription data of the UE, allowed list GPSI(s) of the UE, allowed list of AF(s) that can serve the UE and list of AF that can use the AKMA service from the network and/or whether the UE is registered in 5GS.

Based on the authorization check, in step 6, the UDM provides the result to the AUSF. If authorization check is performed by the UDM and the result indicates that the authorization check is successful, then only the AUSF proceeds further with the procedure, otherwise the AUSF rejects the request from the AF and AUSF sends appropriate error message to the AAnF and the AAnF forwards it to the AF and may to the UE also.

In an embodiment, the authorization check result from the UDM is provided for each entity (may be based on the input parameters in the request, SUPI, GPSI, AF ID), for example, the UE is authorised or not, GPSI is allowed or not, AF is authorised or not, like so.

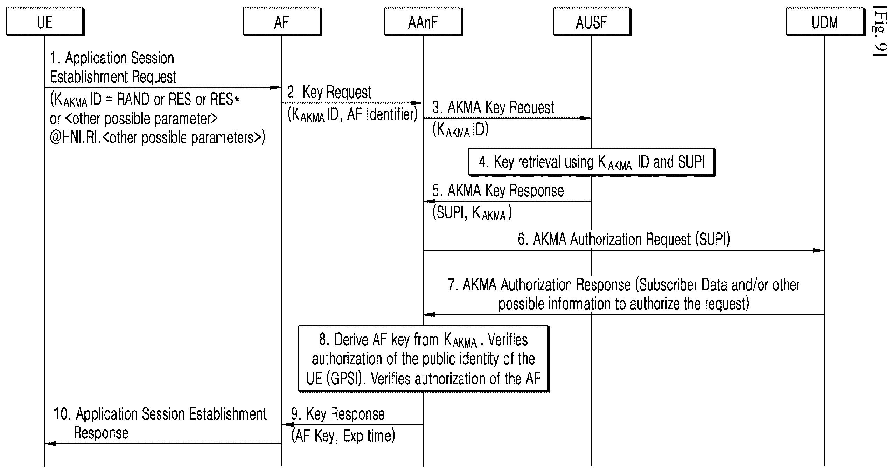

Figure 9 illustrates message flow for solution alternative -1 for AKMA authorization check performed by AAnF.

In an embodiment, the authorization of the UE to access the AKMA service is performed by the AAnF, using the necessary information received from the UDM.

In an embodiment, the authorization of the UE to access the AKMA service and/or authorization of the AF to server the UE and/or authorization of the AF to access the AKMA service is performed by the AAnF, using the subscription data and/or service profile of the UE and/or the allowed list of GPSI/AF and/or whether the UE is registered in 5GS received from the UDM.

Step 1-10: Illustrates the procedure for deriving AKMA Application key for a specific AF. After Step-5, in step 6, the AAnF may request the UDM to provide the necessary information to check authorization of the UE and/or AF to use AKMA feature.

In step 7, the UDM provides the service profile and/or the subscription data of the UE and/or allowed list GPSI(s) of the UE and/or allowed list of AF(s) that can serve the UE and/or list of AF that can use the AKMA service from the network and/or whether the UE is registered in 5GS to the AAnF.

In step 8, the AAnF may perform authorization check of the UE based on the received information from the UDM (service profile and/or Subscription data and/or allowed list GPSI(s) of the UE and/or allowed list of AF(s) that can serve the UE and/or list of AF that can use the AKMA service from the network) and the request received from the AF in step 2. If authorization check is performed by the AAnF, then the AAnF may proceed further only if the authorization check is successful, otherwise the AAnF rejects the request from the AF and AAnF sends appropriate error message to the AF and AF may forward the error message to the UE.

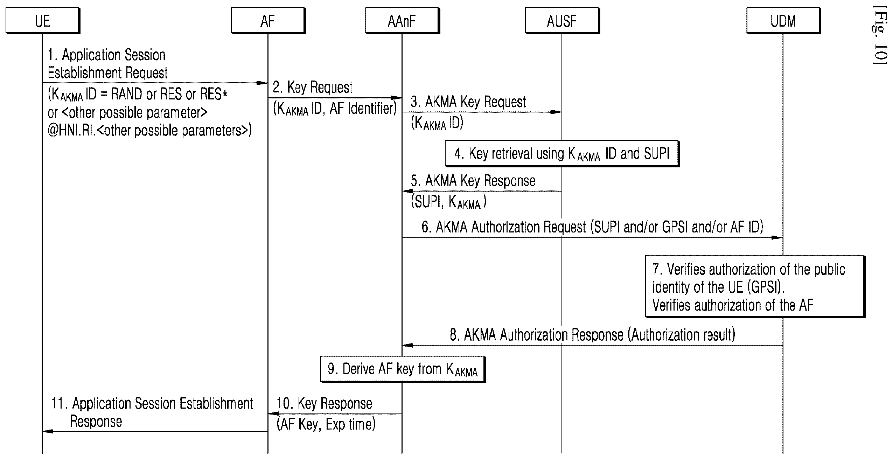

Figure 10 illustrates message flow for solution alternative -2 for AKMA authorization check performed by UDM, requested by AAnF.

In an embodiment, the authorization of the UE to access the AKMA service is performed by the UDM, based on the necessary information received from the AAnF.

In an embodiment, the authorization of the UE to access the AKMA service and/or authorization of the AF to server the UE and/or authorization of the AF to access the AKMA service is performed by the UDM, using the subscription data and/or service profile of the UE and/or the allowed list of GPSI/AF and/or whether the UE is registered in 5GS. The UDM provides the AKMA authorization check as a service to the AAnF, for example using GET method.

Step 1-11: Illustrates the procedure for deriving AKMA Application key for a specific AF. After Step-5, in step 6, the AAnF may request the UDM to perform authorization check by providing necessary input parameters, at least one of the following: SUPI, GPSI and AF ID.

On receiving the request, in step 7, the UDM may perform authorization check on whether the UE and/or AF is authorised to use the AKMA feature, based on at least one of the stored information: the service profile, the subscription data of the UE, allowed list GPSI(s) of the UE, allowed list of AF(s) that can serve the UE and list of AF that can use the AKMA service and/or whether the UE is registered in 5GS from the network.

In step 8, based on the authorization check, the UDM provides the result to the AAnF.

If authorization check is performed by the UDM and the result indicates the authorization check is successful, then only the AAnF proceeds further with the procedure, otherwise the AAnF rejects the request from the AF and AAnF sends appropriate error message to the AF and the AF may forward the error message to the UE.

In an embodiment, the authorization check result from the UDM is provided for each entity (may be based on the input parameters in the request, SUPI, GPSI, AF ID), for example, the UE is authorised or not, GPSI is allowed or not, AF is authorised or not, like so.

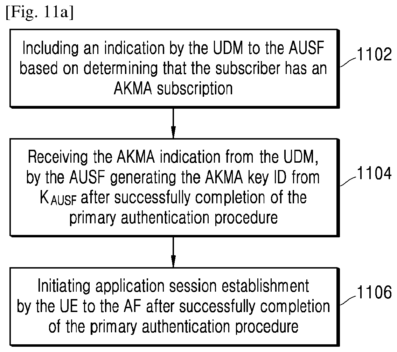

Figure 11a illustrates a method of operation in accordance with Authentication and Key Management for Applications (AKMA) service in 3GPP.

In step 1102, the UDD may include an indication to the AUSF based on determining that the subscriber has an AKMA subscription.

In step 1104, when the AKMA indication is received from the UDM, the AUSF may generate the AKMA key ID from K_{AUSF} after successful completion of the primary authentication procedure.

In step 1106, the UE may initiate the application session establishment to the AF after successful completion of the primary authentication procedure.

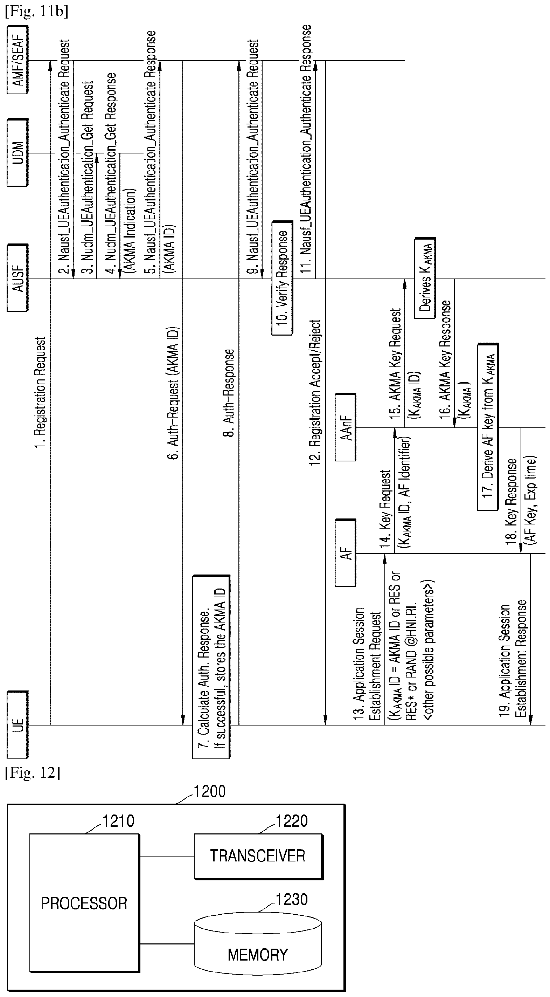

Figure 11b illustrates message flow for AKMA key identifier derivation mechanism.

Step 1-12, The UE initiates a Registration request procedure or service request procedure or PDU session establishment procedure or a new NAS procedure towards the AMF, as specified in TS 23.501 and TS 23.502. As part of the above any one or all mentioned procedures, in step 4, the UDM indicates to the AUSF that the UE has AKMA subscription (UE is authorised for AKMA service), when the AUSF requests the UDM for UE Authentication Get request, to request Authentication vector(s).

In an embodiment, the UDM indicates to the AUSF that the UE is authorised for AKMA based on the subscription data (and/or service profile) of the UE and/or based on the selected authentication method (for example, if the selected authentication is EAP-TLS).

On receiving an indication that the UE is authorised/subscribed for AKMA or based on local policy or based on the selected authentication method (for example, if the selected authentication is EAP-TLS) in response from the UDM, the AUSF generates a unique user part of the AKMA key identifier (K_{AKMA} ID) for the UE and in step 5, the AUSF optionally includes the generated user part of the AKMA key identifier (K_{AKMA} ID) in the response message to the AMF/SEAF.

Then in step 6, the AMF forwards the user part of the K_{AKMA} ID, if received, along with other parameters to the UE in the Authentication request message. An example of the NAI format userpart@realmpart.

In step 7, if the UE validates/verifies the authenticity of the network, then the UE stores the user part of the K_{AKMA} ID, if received.

Step 13-19: After completion of the successful authentication procedure, in step 13, the UE initiates application session establishment by sending application session establishment request to the application function, considering the new parameters.

In an embodiment, the K_{AKMA} ID included in the request message consists of (user part of the NAI format) the network assigned user part of the K_{AKMA} ID in the authentication procedure (stored ID at step 7) or RES (derived as part of authentication procedure) or RES* (derived as part of authentication procedure) or RAND (received as part of authentication procedure)) or "Session ID" (used in the EAP-TLS authentication procedure and stored in the UE and the AUSF is used for the user part of the AKMA key identifier, to uniquely identify the UE in the AUSF) or derived using the K_{AUSF}.

In an embodiment, if the size of the user part of the AKMA key identifier is to be restricted to 128 bits, then the user part of the AKMA key identifier is identified with the 128 least significant bits or most significant bits of the at least one parameter: RES, RES*, Session ID.

The UE includes at least one of the following parameters in the request message: AKMA key identifier (K_{AKMA} ID), GPSI, Routing ID (may be part of the realm in the NAI format).

If the AF does not have an active context associated with the key identifier, then in step 14, the AF sends a request to AAnF with the key identifier to request application function specific AKMA keys for the UE. The AF also includes its identity (AF Id) in the request. The AAnF shall check whether the AAnF can provide the service to the AF by checking the AF Id. If succeeds, the following procedures is executed. Otherwise, the AAnF shall reject the procedure.

If the AAnF is in possession of the AF specific key (K_{AF}), it responds to the AF with the K_{AF} key. If not, the AAnF shall check if it has the UE specific K_{AKMA} key identified by the AKMA key identifier.

If K_{AKMA} is available in AAnF, it shall derive the AF specific AKMA key (K_{AF}) from K_{AKMA} and respond to the AF with K_{AF} and lifetime.

If K_{AKMA} is not available or validity of the K_{AKMA} expired and/or K_{AF} for the AF was already derived from the current K_{AKMA}, in step 15, the AAnF shall send a request to the AUSF to obtain the K_{AKMA} key specific to the UE. It includes the AKMA key identifier in the request.

In step 16, the AUSF shall respond with the K_{AKMA} key identified by the key identifier.

In step 17, the AAnF derives the AF specific key (K_{AF}) from K_{AKMA} and in step 18, the AAnF responds to the AF with K_{AF} and lifetime.

In all embodiment above, the UE supporting AKMA procedures (the procedure defined in this embodiment or procedure defined in the TS 33.501 or TR 33.835) sends a capability indication to a network the Network Function NF (e.g. AMF, AUSF, UDM etc.) indicating that it supports AKMA procedure. In one example, the UE sends the capability indicator in a NAS message during a NAS procedure (e.g. in Registration Request message during the registration procedure). This capability indicator is sent integrity protected or ciphered or both. When the NF receives this capability indicator (either from the UE and/or from another NF), then it executes AKMA procedure, if the capability indicator indicates that the UE supports AKMA feature, otherwise the NF shall not execute the AKMA procedure for the UE. The network also sends its AKMA capability whether it supports AKMA feature or not to the UE in a message or pre-configured in the USIM, whether the HPLMN supports AKMA feature. It is sent either through the application layer or through NAS message during a NAS procedure (e.g. in the registration accept message). The UE initiates AKMA related procedure if the UE receives the AKMA capability from the network if the network supports AKMA.

Figure 12 is a diagram illustrating a user equipment according to an embodiment of the disclosure;
Referring to the Figure 12, the UE 1200 may include a processor 1210, a transceiver 1220 and a memory 1230. However, all of the illustrated components are not essential. The UE 1200 may be implemented by more or less components than those illustrated in the Figure 12. In addition, the processor 1210 and the transceiver 1220 and the memory 1230 may be implemented as a single chip according to another embodiment.

The aforementioned components will now be described in detail.

The processor 1210 may include one or more processors or other processing devices that control the proposed function, process, and/or method. Operation of the UE 1200 may be implemented by the processor 1210.

The transceiver 1220 may be connected to the processor 1210 and transmit and/or receive a signal. In addition, the transceiver 1220 may receive the signal through a wireless channel and output the signal to the processor 1210. The transceiver 1220 may transmit the signal output from the processor 1210 through the wireless channel.

The memory 1230 may store the control information or the data included in a signal obtained by the UE 1200. The memory 1230 may be connected to the processor 1210 and store at least one instruction or a protocol or a parameter for the proposed function, process, and/or method. The memory 1230 may include read-only memory (ROM) and/or random access memory (RAM) and/or hard disk and/or CD-ROM and/or DVD and/or other storage devices.

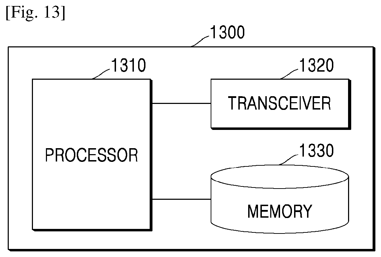

Figure 13 is a diagram illustrating a core network entity according to embodiments of the present disclosure.

The core network entity 1300 may correspond to the Network Function (NF) as described above.

Referring to the Figure 13, the core network entity 1300 may include a processor 1310, a transceiver 1320 and a memory 1330. However, all of the illustrated components are not essential. The core network entity 1300 may be implemented by more or less components than those illustrated in Figure 13. In addition, the processor 1310 and the transceiver 1320 and the memory 1330 may be implemented as a single chip according to another embodiment.

The aforementioned components will now be described in detail.

The transceiver 1320 may provide an interface for performing communication with other devices in a network. That is, the transceiver 1320 may convert a bitstream transmitted from the core network entity 1300 to other devices to a physical signal and covert a physical signal received from other devices to a bitstream. That is, the transceiver 1320 may transmit and receive a signal. The transceiver 1320 may be referred to as modem, transmitter, receiver, communication unit and communication module. The transceiver 1320 may enable the core network entity 1300 to communicate with other devices or system through backhaul connection or other connection method.

The memory 1330 may store a basic program, an application program, configuration information for an operation of the core network entity 1300. The memory 1330 may include volatile memory, non-volatile memory and a combination of the volatile memory and the non-volatile memory. The memory 1330 may provide data according to a request from the processor 1310.

The processor 1310 may control overall operations of the core network entity 1300. For example, the processor 1310 may transmit and receive a signal through the transceiver 1320. The processor 1310 may include at least one processor. The processor 1310 may control the core network entity 1300 to perform operations according to embodiments of the present disclosure.

This summary is provided to introduce a selection of concepts in a simplified format that are further described in the detailed description of the disclosure. This summary is not intended to identify key or essential inventive concepts of the disclosure, nor is it intended for determining the scope of the disclosure.

The present subject matter refers a method of initiating primary authentication for a user equipment (UE). The method comprises receiving, by a unified data management function (UDM), message from another network function (NF) comprising an indication that existing credentials derived as part of authentication are no longer valid. The another NF may be at least one of: Access and Mobility Management Function (AMF), AKMA anchor function (AAnF), authentication server function (AUSF), AF. The UDM initiates a message to another NF comprising an indication that it needs to initiate primary authentication procedure for the UE. Such initiating by the UDM indication to initiate primary authentication further comprises determining and including an indication whether authentication to be performed is required immediately or after a delay. It is determined by the UDM whether the authentication to be performed is required immediately or later based on the request from the another NF. Further, the method comprises receiving, by a AMF, a message from another NF or the UDM comprising an indication to initiate primary authentication procedure for the UE. The AMF initiates the primary authentication procedure for the UE.

In another embodiment, the present subject matter illustrates a method of operation in accordance with Authentication and Key Management for Applications (AKMA) service in 3GPP. The method comprises including an indication by the UDM to the AUSF based on determining that the subscriber has an AKMA subscription. The AKMA indication is received from the UDM, by the AUSF generating the AKMA key ID from KAUSF after successfully completion of the primary authentication procedure. The application session establishment is initiated by the UE to the AF after successfully completion of the primary authentication procedure.

The present disclosure discloses a system and method of generating application specific keys using key derived from network access authentication, when the existing generating application specific keys becomes invalid. In the present disclosure, since the subscription data is with the UDM, a new service provided by the UDM to retrieve the subscription data to perform the authorization by the AUSF and/or by the AAnF or a new service is provided by the UDM to verify the AKMA authorization. In the present disclosure, the AKMA ID is generated and issued by the AUSF, when indicated by the UDM the authentication method and may also to create and issue the AKMA ID to the UE.

To further clarify advantages and features of the present disclosure, a more particular description of the disclosure will be rendered by reference to specific embodiments thereof, which is illustrated in the appended drawings. It is appreciated that these drawings depict only typical embodiments of the disclosure and are therefore not to be considered limiting of its scope. The disclosure will be described and explained with additional specificity and detail with the accompanying drawings.

In accordance with an embodiment of the present disclosure, a method of initiating primary authentication for a user equipment (UE) is provided. The method may comprise: receiving (302), by a unified data management function (UDM), message from network function (NF) comprising an indication that existing credentials derived as part of authentication are no longer valid; initiating (304), by the UDM, a message to NF comprising an indication that it needs to initiate primary authentication procedure for the UE; receiving (306), by a Access and Mobility Management Function (AMF), a message from one of NF and/or the UDM comprising an indication to initiate primary authentication procedure for the UE; and initiating (308), by the AMF, the primary authentication procedure for the UE.

In an embodiment, wherein the NF is at least one of: AMF, AKMA anchor function (AAnF), authentication server function (AUSF), application function (AF) and wherein the existing credentials are no longer valid in the NF due to one or more of : a) expiry of lifetime of the credentials; and b) loss of credentials due to network problems and/or constrains.

In an embodiment, wherein initiating by the UDM indication to initiate primary authentication further comprises: i) determining and including an indication whether authentication to be performed is required immediately or after a delay; and ii) determining by the UDM whether the authentication to be performed is required immediately or later based on the request from the NF.

In accordance with an embodiment of the present disclosure, a method of generating application specific keys in accordance with Authentication and Key Management for Applications (AKMA) service in 3GPP is provided. The method may comprise: initiating (102) application session establishment by user equipment (UE) by sending an application session establishment request to an application function (AF), wherein the request comprises one or more of : AKMA Key Id, GPSI, Routing ID; sending (104) by the AF a request to AKAM anchor function (AAnF) with a key identifier to request application function specific AKMA keys for the UE; checking (106) by AAnF availability of UE specific K_{AKMA} key identified by the AKMA key identifier; deriving (108) by the AAnF the AF specific AKMA key (K_{AF}) from K_{AKMA} if K_{AKMA} is available in AAnF and thereby responding to the AF with KAF; sending (110) a request to an authentication server function (AUSF) by the AAnF to obtain the K_{AKMA} key specific to the UE if K_{AKMA} is not available with the AAnF or invalid in the AAnF or K_{AKMA} is already used for K_{AF} derivation for the requesting AF, said request from the AAnF to the AUSF comprising the AKMA key identifier and optionally an SUPI; sending (112) by the AUSF a request to a Unified Data Management Function (UDM) to initiate primary authentication for the UE and including the SUPI of the UE in the request to the UDM; requesting (114) by the UDM the AMF serving the UE to initiate a re-authentication procedure on receiving the request from the AUSF; initiating (116) by the AMF authentication procedure with the UE and thereby generating K_{AUSF}; deriving (118) by the AUSF the key K_{AKMA} based on the K_{AUSF} and providing the derived key K_{AKMA} to the AAnF to in turn derive the specific key K_{AF} for the AF; and sending (120) by the AF the Application session establishment response to the UE.

In an embodiment, wherein the application specific keys are generated using the key derived from a network access re-authentication and wherein based on non-availability of the valid K_{AKMA} at the AAnF or invalidity of the K_{AKMA.}

In an embodiment, the method may further comprise: indicating by the AUSF that the bootstrapping of a K_{AUSF} key is required to the AAnF and to the UE; further indicating by the AUSF that the UE needs to re-initiate the session establishment request after successful authentication procedure; sending by the AUSF a request to the UDM to initiate primary authentication for the UE; requesting by the UDM the AMF serving the UE to initiate a re-authentication procedure on receiving the request from initiating by the AMF authentication procedure with the UE; initiating by the UE the application session establishment by re-sending application session establishment request to the AF again after successful re-authentication based on one or more of: new AKMA Key Id, GPSI, Routing ID; sending by the AF a request to the AAnF with the key identifier to request application function specific keys for the UE, if the AF does not have an active context associated with the key identifier; checking by the AAnF if it has the UE specific K_{AKMA} key identified by the AKMA key identifier; responding by the AUSF with the K_{AKMA} key identified by the key identifier; deriving by the AAnF the AF specific key (K_{AF}) from K_{AKMA} and responding to the AF with K_{AF} and lifetime.

In an embodiment, wherein sending by the AUSF the re-authentication request comprises: sending directly by the AUSF to the AMF serving the UE the request to initiate a re-authentication procedure; initiating by the UE application session establishment by re-sending application session establishment request to the AF based on one or more of: new AKMA Key Id, GPSI, Routing ID.

In an embodiment, wherein the AAnF is configured to: indicate to the UE that bootstrapping of the K_{AUSF} key is required and re-initiate the session establishment request after authentication procedure; request by the UE to the AMF to initiate the authentication procedure by including an indication in the NAS procedure; and indication in the NAS procedure being one of: new indicator, setting the Key Set Identifier value as 111.

In accordance with an embodiment of the present disclosure, a method of operation in accordance with Authentication and Key Management for Applications (AKMA) service in 3GPP is provided. The method may comprise: including an indication by a unified data management function (UDM) to an Authentication Server Function (AUSF) based on determining that the subscriber has an AKMA subscription; receiving the AKMA indication from the UDM, by the AUSF generating the AKMA key ID from KAUSF after successfully completion of the primary authentication procedure; and initiating application session establishment by a user equipment (UE) to an application function (AF) after successfully completion of the primary authentication procedure.

In an embodiment, the method may further comprise: sending by the UE a capability indication to a Network Function NF indicating support to AKMA procedure, said indication being integrity protected and/or ciphered; receiving by the NF receives the capability indicating that the UE supports AKMA feature; sending by the NF an AKMA capability indicating support to AKMA feature to the UE in a message through an application layer or through NAS message during a NAS procedure; and initiating by the UE AKMA related procedure based on receiving the message.

In an embodiment, wherein the AUSF is configured to perform: an authorization check of the UE to access the AKMA service; an authorization check of the AF to serve the UE; and an authorization check of the AF to access the AKMA service; wherein said authorization check is performed using one or more of: information received from the UDM, said information comprising: service profile and/or Subscription data and/or allowed list GPSI(s) of the UE and/or allowed list of AF(s) that can serve the UE and/or list of AF that can use the AKMA service from the network and/or whether the UE is registered in 5G; and the request received from the AAnF.

In an embodiment, wherein the AUSF is configured to: request the UDM to provide necessary information to check authorization of the UE and/or AF to use AKMA feature; receive from UDM the service profile and/or the subscription data of the UE and/or allowed list GPSI(s) of the UE and/or allowed list of AF(s) that can serve the UE and/or list of AF that use the AKMA service from the network and/or whether the UE is registered in 5G to the AUSF; performing by the AUSF an authorization check of the UE based on the received information from the UDM and the request received from the AAnF; and in case of failure of the authorization check, rejecting by the AUSF the request from the AAnF and sending an error message to the AAnF and for forwarding to the UE via the AF.

In an embodiment, wherein the UDM is configured to: perform authorization check of the UE to access the AKMA service and/or authorization of the AF to serve the UE and/or authorization of the AF to access the AKMA service, said authorization check by the UDM comprising the steps of: receiving from the AUSF a request to perform authorization check by receiving input parameters comprising one or more of SUPI, GPSI, AF ID; performing by the UDM an authorization check on whether the UE and/or AF is authorised to use the AKMA feature, based on service profile, the subscription data of the UE, allowed list GPSI(s) of the UE, allowed list of AF(s) that can serve the UE and list of AF that use the AKMA service from the network and/or whether the UE is registered in 5G; providing an authorization check result by the UDM to the AUSF; and in case of a negative authorization check result, enabling the AUSF to reject the request from the AF and allowing the AUSF to send appropriate error message to the AAnF and thereafter to the UE via the AF.

In an embodiment, wherein the AAnF is configured to: perform an authorization check of the UE to access the AKMA service and/or authorization of the AF to serve the UE and/or authorization of the AF to access the AKMA service, said authorization check by the UDM comprising the steps of: requesting the UDM by the AAnF the necessary information to check authorization of the UE and/or AF to use AKMA; receiving from the UDM the service profile and/or the subscription data of the UE and/or allowed list GPSI(s) of the UE and/or allowed list of AF(s) that can serve the UE and/or list of AF that can use the AKMA service from the network and/or whether the UE is registered in 5GS to the AAnF; performing by the AAnF authorization check of the UE based on the received information from the UDM; in case of a negative authorization check result, rejecting by the AAnF the request from the AF and sending the error message to the UE via the AF.

In an embodiment, wherein the UDM is configured for: performing authorization -check of the UE to access the AKMA service, said authorization check by the UDM comprising the steps of: receiving from the AAnF a request to perform authorization check by receiving input parameters comprising SUPI, GPSI, AF ID; perform the authorization check based on at least one of: the service profile, the subscription data of the UE, allowed list GPSI(s) of the UE, allowed list of AF(s) that serve the UE and list of AF that use the AKMA service and/or whether the UE is registered in 5GS from the network; providing an authorization check result by the UDM to the AAnF; in case of a negative authorization check result, enabling the AAnF to reject the request from the AF and allowing the AAnF to send appropriate error message to the UE via the AF.

In accordance with an embodiment of the present disclosure, a system for initiating primary authentication for a user equipment (UE) is provided. The system may comprise one or more networking nodes configured for: receiving (302), by a unified data management function (UDM), message from network function (NF) comprising an indication that existing credentials derived as part of authentication are no longer valid; initiating (304), by the UDM, a message to another NF comprising an indication that it needs to initiate primary authentication procedure for the UE; c) receiving (306), by a Access and Mobility Management Function (AMF), a message from one of NF and/or the UDM comprising an indication to initiate primary authentication procedure for the UE; and d) initiating (308), by the AMF, the primary authentication procedure for the UE.

In an embodiment, wherein the NF is at least one of: AMF, AKMA anchor function (AAnF), authentication server function (AUSF), application function (AF) and wherein the existing credentials are no longer valid in the NF due to one or more of : a) expiry of lifetime of the credentials; and b) loss of credentials due to network problems and/or constrains.

In an embodiment, wherein initiating by the UDM indication to initiate primary authentication further comprises: i) determining and including an indication whether authentication to be performed is required immediately or after a delay; and ii) determining by the UDM whether the authentication to be performed is required immediately or later based on the request from the another NF.

In accordance with an embodiment of the present disclosure, a system of generating application specific keys in accordance with Authentication and Key Management for Applications (AKMA) service in 3GPP is provide. The method may comprise: initiating (102) application session establishment by user equipment (UE) by sending an application session establishment request to an application function (AF), wherein the request comprises one or more of : AKMA Key Id, GPSI, Routing ID; sending (104) by the AF a request to AKMA anchor function (AAnF) with a key identifier to request application function specific AKMA keys for the UE; checking (106) by AAnF availability of UE specific K_{AKMA} key identified by the AKMA key identifier; deriving (108) by the AAnF the AF specific AKMA key (KAF) from K_{AKMA} if K_{AKMA} is available in AAnF and thereby responding to the application function (AF) with KAF; sending (110) a request to the Authentication Server Function (AUSF) by the AAnF to obtain the K_{AKMA} key specific to the UE if K_{AKMA} is not available with the AAnF or invalid in the AAnF or K_{AKMA} is already used for K_{AF} derivation for the requesting AF, said request from the AAnF to the AUSF comprising the AKMA key identifier and optionally an SUPI; sending (112) by the AUSF a request to a Unified Data Management Function (UDM) to initiate primary authentication for the UE and including the SUPI of the UE in the request to the UDM; requesting (114) by the UDM the Access and Mobility Management Function (AMF) serving the UE to initiate a re-authentication procedure on receiving the request from the AUSF; initiating (116) by the AMF authentication procedure with the UE and thereby generating K_{AUSF}; deriving (118) by the AUSF the key K_{AKMA} based on the K_{AUSF} and providing the derived key K_{AKMA} to the AAnF to in turn derive the specific key K_{AF} for the AF; and sending (120) by the AF the Application session establishment response to the UE.

In an embodiment, wherein the application specific keys are generated using the key derived from a network access re-authentication and wherein based on non-availability of the valid K_{AKMA} (at the AAnF or invalidity of the KAKMA.

In an embodiment, the method may further comprise: indicating by the AUSF that the bootstrapping of a K_{AUSF} key is required to the AAnF and to the UE; further indicating by the AUSF that the UE needs to re-initiate the session establishment request after successful authentication procedure; sending by the AUSF a request to the UDM to initiate primary authentication for the UE; requesting by the UDM the AMF serving the UE to initiate a re-authentication procedure on receiving the request from initiating by the AMF authentication procedure with the UE; initiating by the UE initiates application session establishment by re-sending application session establishment request to the AF again after successful re-authentication based on one or more of: new AKMA Key Id, GPSI, Routing ID; sending by the AF a request to the AAnF with the key identifier to request application function specific keys for the UE, if the AF does not have an active context associated with the key identifier; checking by the AAnF if it has the UE specific K_{AKMA} key identified by the AKMA key identifier; responding by the AUSF with the K_{AKMA} key identified by the key identifier; and deriving by the AAnF the AF specific key (K_{AF}) from K_{AKMA} and responding to the AF with K_{AF} and lifetime.

In an embodiment, wherein sending by the AUSF the re-authentication request comprises: sending directly by the AUSF to the AMF serving the UE the request to initiate a re-authentication procedure; and initiating by the UE application session establishment by re-sending application session establishment request to the AF based on one or more of: new AKMA Key Id, GPSI, Routing ID.

In an embodiment, wherein the AAnF is configured to: indicate to the UE that bootstrapping of the K_{AUSF} key is required and re-initiate the session establishment request after authentication procedure; request by the UE to the AMF to initiate the authentication procedure by including an indication in the NAS procedure; and indication in the NAS procedure being one of: new indicator, setting the Key Set Identifier value as 111.

In accordance with an embodiment of the present disclosure, a system for rendering Authentication and Key Management for Applications (AKMA) service in 3GPP may comprise a plurality of networking nodes configured for: including an indication by a unified data management function (UDM) to an Authentication Server Function (AUSF) based on determining that the subscriber has an AKMA subscription; receiving the AKMA indication from the UDM, by the AUSF generating the AKMA key ID from KAUSF after successfully completion of the primary authentication procedure; and initiating application session establishment by a user equipment (UE) to an application function (AF) after successfully completion of the primary authentication procedure.

In an embodiment, the method may further comprise: sending by the UE a capability indication to a Network Function NF indicating support to AKMA procedure, said indication being integrity protected and/or ciphered; receiving by the NF receives the capability indicating that the UE supports AKMA feature; sending by the NF an AKMA capability indicating support to AKMA feature to the UE in a message through an application layer or through NAS message during a NAS procedure; and initiating by the UE AKMA related procedure based on receiving the message

In an embodiment, wherein the AUSF is configured to perform: an authorization check of the UE to access the AKMA service; an authorization check of the AF to serve the UE; and an authorization check of the AF to access the AKMA service, wherein said authorization check is performed using one or more of: information received from the UDM, said information comprising: service profile and/or Subscription data and/or allowed list GPSI(s) of the UE and/or allowed list of AF(s) that can serve the UE and/or list of AF that can use the AKMA service from the network and/or whether the UE is registered in 5G; and the request received from the AAnF.

In an embodiment, wherein the AUSF is configured to: request the UDM to provide necessary information to check authorization of the UE and/or AF to use AKMA feature; receive from UDM the service profile and/or the subscription data of the UE and/or allowed list GPSI(s) of the UE and/or allowed list of AF(s) that can serve the UE and/or list of AF that use the AKMA service from the network and/or whether the UE is registered in 5G to the AUSF; performing by the AUSF an authorization check of the UE based on the received information from the UDM and the request received from the AAnF; in case of failure of the authorization check, rejecting by the AUSF the request from the AAnF and sending an error message to the AAnF and for forwarding to the UE via the AF; performing the AF authorization check by the AAnF (whether the AF is allowed to obtain the AKMA service) based on the configured local policy; and performing the AF authorization check by the AAnF based on the authorization information/policy provided by the NEF (for example, using Access Token).

In an embodiment, wherein the UDM is configured to perform authorization check of the UE to access the AKMA service and/or authorization of the AF to serve the UE and/or authorization of the AF to access the AKMA service, said authorization check by the UDM comprising the steps of: receiving from the AUSF a request to perform authorization check by receiving input parameters comprising one or more of SUPI, GPSI, AF ID; performing by the UDM an authorization check on whether the UE and/or AF is authorised to use the AKMA feature, based on service profile, the subscription data of the UE, allowed list GPSI(s) of the UE, allowed list of AF(s) that can serve the UE and list of AF that use the AKMA service from the network and/or whether the UE is registered in 5G; providing an authorization check result by the UDM to the AUSF; and in case of a negative authorization check result, enabling the AUSF to reject the request from the AF and allowing the AUSF to send appropriate error message to the AAnF and thereafter to the UE via the AF.

In an embodiment, wherein the AAnF is configured to: perform an authorization check of the UE to access the AKMA service and/or authorization of the AF to serve the UE and/or authorization of the AF to access the AKMA service, said authorization check by the UDM comprising the steps of: requesting the UDM by the AAnF the necessary information to check authorization of the UE and/or AF to use AKMA; receiving from the UDM the service profile and/or the subscription data of the UE and/or allowed list GPSI(s) of the UE and/or allowed list of AF(s) that can serve the UE and/or list of AF that can use the AKMA service from the network and/or whether the UE is registered in 5GS to the AAnF; performing by the AAnF authorization check of the UE based on the received information from the UDM; and in case of a negative authorization check result, rejecting by the AAnF the request from the AF and sending the error message to the UE via the AF.

In an embodiment, wherein the UDM is configured for: performing authorization -check of the UE to access the AKMA service, said authorization check by the UDM comprising the steps of: receiving from the AAnF a request to perform authorization check by receiving input parameters comprising SUPI, GPSI, AF ID; perform the authorization check based on at least one of: the service profile, the subscription data of the UE, allowed list GPSI(s) of the UE, allowed list of AF(s) that serve the UE and list of AF that use the AKMA service and/or whether the UE is registered in 5GS from the network; providing an authorization check result by the UDM to the AAnF; and in case of a negative authorization check result, enabling the AAnF to reject the request from the AF and allowing the AAnF to send appropriate error message to the UE via the AF.

In accordance with an embodiment of the disclosure, a method performed by an authentication server function (AUSF) in a wireless communication system is provided. The method may comprise: transmitting, to a unified data management (UDM), a message for requesting authentication information associated with a user equipment (UE); in response to the transmitted message, receiving, from the UDM, authentication and key management for applications (AKMA) indication indicating that AKMA anchor keys need to be generated for the UE; and based on the received AKMA indication, generating AKMA key material of the UE including AKMA key identifier (A-KID) for the UE, wherein the AKMA indication is received from the UDM in case that AKMA subscription data stored in the UDM indicates that the UE is allowed to use AKMA.

In accordance with an embodiment of the disclosure, a method performed by AKMA anchor function (AAnF) in a wireless communication system is provided. The method may comprise: receiving, from an application function (AF), a message for requesting authentication and key management for applications (AKMA) application key for a user equipment (UE); checking whether the AAnF provides AKMA service to the AF based on a local policy; and based on a result of the checking, determining whether to derive the requested AKMA application key for the UE.

In an embodiment, wherein the AF comprises an internal AF.

In an embodiment, wherein the internal AF directly communicates with the AAnF.

In an embodiment, wherein the determining of whether to derive the requested AKMA application key for the UE comprises: in case that the checking succeeds, deriving the requested AKMA application key for the UE.

In an embodiment, wherein the determining of whether to derive the requested AKMA application key for the UE comprises: in case that the checking fails, rejecting the received message for the AKMA application key for the UE.

In accordance with an embodiment of the disclosure, a method performed by an authentication server function (AUSF) in a wireless communication system is provided. The method may comprise: receiving, from AKMA anchor function (AAnF), a message for requesting the AUSF to generate authentication and key management for applications (AKMA) anchor key for re-keying expired AKMA application key; based on the received message, requesting access and mobility management function (AMF) to initiate a primary authentication procedure; and generating the AKMA application key based on a key for the AUSF acquired from the primary authentication procedure.

In an embodiment, wherein the receiving of the message comprises: in case that the re-keying of the expired AKMA application key is triggered by an application function (AF), receiving, from the AAnF, the message for requesting the AUSF to generate the AKMA anchor key for re-keying the expired AKMA application key.

In an embodiment, wherein the receiving of the message comprises: in case that a first AKMA anchor key stored in the AAnF is the same as a second AKMA anchor key used to generate the expired AKMA application key, receiving, from the AAnF, the message for requesting the AUSF to generate the AKMA anchor key for re-keying the expired AKMA application key.

In accordance with an embodiment of the disclosure, a method performed by a user equipment (UE) in a wireless communication system is provided. The method may comprise: in case that a request for accessing an application function (AF) is rejected due to a lifetime expiry of authentication and key management for applications (AKMA) application key, transmitting, to access and mobility management function (AMF), a message with an indication to trigger a primary authentication procedure; and after a completion of the primary authentication procedure, requesting an access to the AF.

In an embodiment, wherein the AKMA application key is re-keyed based on the primary authentication procedure.

In an embodiment, wherein a re-keying of the AKMA application key is triggered by the AF.

In accordance with an embodiment of the disclosure, a method performed by a unified data management (UDM) in a wireless communication system is provided. The method may comprise: receiving, from an authentication server function (AUSF), a message for requesting authentication information associated with a user equipment (UE); and in response to the received message, transmitting, to the AUSF, authentication and key management for applications (AKMA) indication indicating that AKMA anchor keys need to be generated for the UE, wherein AKMA key material of the UE including AKMA key identifier (A-KID) for the UE is generated based on the transmitted AKMA indication, and wherein the AKMA indication is transmitted to the AUSF in case that AKMA subscription data stored in the UDM indicates that the UE is allowed to use AKMA.

In accordance with an embodiment of the disclosure, an authentication server function (AUSF) in a wireless communication system is provided. The AUSF may comprise: a transceiver; and at least one processor configured to: transmit, to a unified data management (UDM) via the transceiver, a message for requesting authentication information associated with a user equipment (UE); in response to the transmitted message, receive, from the UDM via the transceiver, authentication and key management for applications (AKMA) indication indicating that AKMA anchor keys need to be generated for the UE; and based on the received AKMA indication, generate AKMA key material of the UE including AKMA key identifier (A-KID) for the UE, wherein the AKMA indication is received from the UDM in case that AKMA subscription data stored in the UDM indicates that the UE is allowed to use AKMA.

In accordance with an embodiment of the disclosure, AKMA anchor function (AAnF) in a wireless communication system is provided. The AAnF may comprise: a transceiver; and at least one processor configured to: receive, from an application function (AF) via the transceiver, a message for requesting authentication and key management for applications (AKMA) application key for a user equipment (UE); check whether the AAnF provides AKMA service to the AF based on a local policy; and based on a result of the checking, determine whether to derive the requested AKMA application key for the UE.

In an embodiment, wherein the AF comprises an internal AF.

In an embodiment, wherein the internal AF directly communicates with the AAnF.

In an embodiment, wherein the at least one processor is further configured to: in case that the checking succeeds, derive the requested AKMA application key for the UE.

In an embodiment, wherein the at least one processor is further configured to: in case that the checking fails, reject the received message for the AKMA application key for the UE.

In accordance with an embodiment of the disclosure, an authentication server function (AUSF) in a wireless communication system is provided. The AUSF may comprise: a transceiver; and at least one processor configured to: receive, from AKMA anchor function (AAnF) via the transceiver, a message for requesting the AUSF to generate authentication and key management for applications (AKMA) anchor key for re-keying expired AKMA application key; based on the received message, request, via the transceiver, access and mobility management function (AMF) to initiate a primary authentication procedure; and generate the AKMA application key based on a key for the AUSF acquired from the primary authentication procedure.

In an embodiment, wherein the at least one processor is configured to: in case that the re-keying of the expired AKMA application key is triggered by an application function (AF), receive, from the AAnF via the transceiver, the message for requesting the AUSF to generate the AKMA anchor key for re-keying the expired AKMA application key.

In an embodiment, wherein the at least one processor is configured to: in case that a first AKMA anchor key stored in the AAnF is the same as a second AKMA anchor key used to generate the expired AKMA application key, receive, from the AAnF via the transceiver, the message for requesting the AUSF to generate the AKMA anchor key for re-keying the expired AKMA application key.

In accordance with an embodiment of the disclosure, a user equipment (UE) in a wireless communication system is provided. The UE may comprise: a transceiver; and at least one processor configured to: in case that a request for accessing an application function (AF) is rejected due to a lifetime expiry of authentication and key management for applications (AKMA) application key, transmit, to access and mobility management function (AMF) via the transceiver, a message with an indication to trigger a primary authentication procedure; and after a completion of the primary authentication procedure, request an access to the AF via the transceiver.

In an embodiment, wherein the AKMA application key is re-keyed based on the primary authentication procedure.

In an embodiment, wherein a re-keying of the AKMA application key is triggered by the AF.

In accordance with an embodiment of the disclosure, a unified data management (UDM) in a wireless communication system is provided. The UDM may comprise: a transceiver; and at least one processor configured to: receive, from an authentication server function (AUSF) via the transceiver, a message for requesting authentication information associated with a user equipment (UE); and in response to the received message, transmit, to the AUSF via the transceiver, authentication and key management for applications (AKMA) indication indicating that AKMA anchor keys need to be generated for the UE, wherein AKMA key material of the UE including AKMA key identifier (A-KID) for the UE is generated based on the transmitted AKMA indication, and wherein the AKMA indication is transmitted to the AUSF in case that AKMA subscription data stored in the UDM indicates that the UE is allowed to use AKMA.

According to an embodiment of the disclosure, a method performed by an authentication server function (AUSF) in a wireless communication system is provided. The method may comprise: receiving, from AKMA anchor function (AAnF), a message for requesting the AUSF to generate authentication and key management for applications (AKMA) anchor key for AKMA application key; based on the received message, requesting access and mobility management function (AMF) to initiate a primary authentication procedure; and generating the AKMA application key based on a key for the AUSF acquired from the primary authentication procedure.

In an embodiment, wherein the requesting comprises: requesting, via a unified data management function (UDM), the AMF to initiate the primary authentication procedure.

According to an embodiment of the disclosure, a method performed by a user equipment (UE) in a wireless communication system is provided. The method may comprise: in case that a request for accessing an application function (AF) is rejected, transmitting, to access and mobility management function (AMF), a message with an indication to trigger a primary authentication procedure; and after a completion of the primary authentication procedure, requesting an access to the AF.

In an embodiment, wherein the AKMA application key is generated based on the primary authentication procedure.

According to an embodiment of the disclosure, a method of initiating primary authentication for a user equipment (UE) is provided. The method may comprise: receiving (302), by a unified data management function (UDM), message from network function (NF) comprising an indication that existing credentials derived as part of authentication are no longer valid; initiating (304), by the UDM, a message to NF comprising an indication that it needs to initiate primary authentication procedure for the UE; receiving (306), by a Access and Mobility Management Function (AMF), a message from one of NF and/or the UDM comprising an indication to initiate primary authentication procedure for the UE; and initiating (308), by the AMF, the primary authentication procedure for the UE.

In an embodiment, wherein the NF is at least one of: AMF, AKMA anchor function (AAnF), authentication server function (AUSF), application function (AF) and wherein the existing credentials are no longer valid in the NF due to one or more of : a) expiry of lifetime of the credentials; and b) loss of credentials due to network problems and/or constrains.

In an embodiment, wherein initiating by the UDM indication to initiate primary authentication further comprises: i) determining and including an indication whether authentication to be performed is required immediately or after a delay; and ii) determining by the UDM whether the authentication to be performed is required immediately or later based on the request from the NF.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A method performed by an authentication and key management for applications, AKMA, anchor function, AAnF, entity of a wireless communication system, the method comprising:
receiving, from an application function, AF, entity, a message for requesting an AKMA application key for a user equipment, UE (1200), wherein the message for requesting the AKMA application key includes an AF identifier, ID, of the AF entity;
checking that the AF entity is allowed to obtain an AKMA service from the AAnF entity, based on a configured local policy or authorization information;
transmitting, to a unified data management, UDM, entity, a message for requesting a generic public subscription identifier, GPSI, of the UE (1200);
receiving, from the UDM entity, a response message including the GPSI;
determining whether to provide the AKMA service to the UE, based on the GPSI;
based on the AF entity being allowed to obtain the AKMA service from the AAnF entity and the determination to provide the AKMA service to the UE, deriving the requested AKMA application key for the UE (1200) from an AKMA Anchor Key, K_{AKMA}; and
transmitting, to the AF entity, a response message including the derived AKMA application key.

2. The method of claim 1, wherein the response message further includes an expiration time of the AKMA application key.

3. The method of claim 1, wherein the message for requesting the AKMA application key further includes an AKMA key ID related to the UE (1200).

4. The method of claim 1, further comprising:
in case that the AF entity is not allowed to obtain the AKMA service from the AAnF entity, rejecting the message for requesting the AKMA application key.

5. An authentication and key management for applications, AKMA, anchor function, AAnF, entity of a wireless communication system, the AAnF entity comprising:
a transceiver; and
at least one processor coupled with the transceiver and configured to:
receive, from an application function, AF, entity, a message for requesting an AKMA application key for a user equipment, UE (1200), wherein the message for requesting the AKMA application key includes an AF identifier, ID, of the AF entity;
check that the AF entity is allowed to obtain an AKMA service from the AAnF entity, based on a configured local policy or authorization information;
transmit, to a unified data management, UDM, entity, a message for requesting a generic public subscription identifier, GPSI, of the UE (1200);
receive, from the UDM entity, a response message including the GPSI;
determine whether to provide the AKMA service to the UE, based on the GPSI;
based on the AF entity being allowed to obtain the AKMA service from the AAnF entity and the determination to provide the AKMA service to the UE, derive the requested AKMA application key for the UE (1200) from an AKMA Anchor Key, K_{AKMA}; and
transmit, to the AF entity, a response message including the derived AKMA application key.

6. The AAnF entity of claim 5, wherein the response message further includes an expiration time of the AKMA application key.

7. The AAnF entity of claim 5, wherein the message for requesting the AKMA application key further includes an AKMA key ID related to the UE (1200).

8. The AAnF entity of claim 5, wherein the at least one processor is further configured to:
in case that the AF entity is not allowed to obtain the AKMA service from the AAnF entity, reject the message for requesting the AKMA application key.

## Patentansprüche

1. Verfahren, durchgeführt von einer Einheit einer Ankerfunktion, AAnF, der Authentifizierung und Schlüsselverwaltung für Anwendungen, AKMA, eines drahtlosen Kommunikationssystems, wobei das Verfahren umfasst:
Empfangen, von einer Anwendungsfunktions-, AF,-Einheit, einer Nachricht zum Anfordern eines AKMA-Anwendungsschlüssels für ein Benutzergerät, UE (1200), wobei die Nachricht zum Anfordern des AKMA-Anwendungsschlüssels eine AF-Kennung, ID, der AF-Einheit enthält;
Prüfen, dass die AF-Einheit berechtigt ist, einen AKMA-Dienst von der AAnF-Einheit zu erhalten, basierend auf einer konfigurierten lokalen Richtlinie oder von Autorisierungsinformationen;
Senden, an eine Einheit einer einheitlichen Datenverwaltungs-, UDM-Einheit, einer Nachricht zum Anfordern einer generischen öffentlichen Abonnementkennung, GPSI, des UE (1200);
Empfangen, von der UDM-Einheit, einer Antwortnachricht, die die GPSI enthält;
Bestimmen, basierend auf der GPSI, ob der AKMA-Dienst für das UE bereitgestellt werden soll;
basierend darauf, dass die AF-Einheit berechtigt ist, den AKMA-Dienst von der AAnF-Einheit zu erhalten, und der Bestimmung, den AKMA-Dienst für das UE bereitzustellen, Ableiten des angeforderten AKMA-Anwendungsschlüssels für das UE (1200) aus einem AKMA-Ankerschlüssel, K_{AKMA}; und
Senden, an die AF-Einheit, einer Antwortnachricht, die den abgeleiteten AKMA-Anwendungsschlüssel enthält.

2. Verfahren nach Anspruch 1, wobei die Antwortnachricht ferner eine Ablaufzeit des AKMA-Anwendungsschlüssels enthält.

3. Verfahren nach Anspruch 1, wobei die Nachricht zum Anfordern des AKMA-Anwendungsschlüssels ferner eine AKMA-Schlüssel-ID in Bezug auf das UE (1200) enthält.

4. Verfahren nach Anspruch 1, ferner umfassend:
in dem Fall, dass die AF-Einheit nicht berechtigt ist, den AKMA-Dienst von der AAnF-Einheit zu erhalten, Ablehnen der Nachricht zum Anfordern des AKMA-Anwendungsschlüssels.

5. Einheit einer Ankerfunktion, AAnF, der Authentifizierung und Schlüsselverwaltung für Anwendungen, AKMA, eines drahtlosen Kommunikationssystems, wobei die AAnF-Einheit umfasst:
einen Sendeempfänger; und
mindestens einen Prozessor, der mit dem Sendeempfänger gekoppelt ist und konfiguriert ist zum:
Empfangen, von einer Anwendungsfunktions-, AF,-Einheit, einer Nachricht zum Anfordern eines AKMA-Anwendungsschlüssels für ein Benutzergerät, UE (1200), wobei die Nachricht zum Anfordern des AKMA-Anwendungsschlüssels eine AF-Kennung, ID, der AF-Einheit enthält;
Prüfen, dass die AF-Einheit berechtigt ist, einen AKMA-Dienst von der AAnF-Einheit zu erhalten, basierend auf einer konfigurierten lokalen Richtlinie oder von Autorisierungsinformationen;
Senden, an eine Einheit einer einheitlichen Datenverwaltung, UDM, einer Nachricht zum Anfordern einer generischen öffentlichen Abonnementkennung, GPSI, des UE (1200);
Empfangen, von der UDM-Einheit, einer Antwortnachricht, die die GPSI enthält;
Bestimmen, basierend auf der GPSI, ob der AKMA-Dienst für das UE bereitgestellt werden soll;
basierend darauf, dass die AF-Einheit berechtigt ist, den AKMA-Dienst von der AAnF-Einheit zu erhalten, und der Bestimmung, den AKMA-Dienst für das UE bereitzustellen, Ableiten des angeforderten AKMA-Anwendungsschlüssels für das UE (1200) aus einem AKMA-Ankerschlüssel, K_{AKMA}; und
Senden, an die AF-Einheit, einer Antwortnachricht, die den abgeleiteten AKMA-Anwendungsschlüssel enthält.

6. AAnF-Einheit nach Anspruch 5, wobei die Antwortnachricht ferner eine Ablaufzeit des AKMA-Anwendungsschlüssels enthält.

7. AAnF-Einheit nach Anspruch 5, wobei die Nachricht zum Anfordern des AKMA-Anwendungsschlüssels ferner eine AKMA-Schlüssel-ID in Bezug auf das UE (1200) enthält.

8. AAnF-Einheit nach Anspruch 5, wobei der mindestens eine Prozessor ferner konfiguriert ist zum:
in dem Fall, dass die AF-Einheit nicht berechtigt ist, den AKMA-Dienst von der AAnF-Einheit zu erhalten, Ablehnen der Nachricht zum Anfordern des AKMA-Anwendungsschlüssels.

## Revendications

1. Procédé mis en œuvre par une entité de fonction d'ancrage, AAnF, d'authentification et de gestion de clés pour les applications, AKMA, d'un système de communication sans fil, le procédé comprenant :
recevoir, depuis une entité de fonction d'application, AF, un message de demande d'une clé d'application AKMA pour un équipement utilisateur, UE (1200), dans lequel le message de demande de la clé d'application AKMA comprend un identifiant AF, ID, de l'entité AF ;
vérifier que l'entité AF est autorisée à obtenir un service AKMA auprès de l'entité AAnF, sur la base d'une politique locale configurée ou d'informations d'autorisation ;
transmettre, à une entité de gestion des données unifiées, UDM, un message de demande d'un identifiant public générique d'abonnement, GPSI, de l'UE (1200) ;
recevoir, depuis l'entité UDM, un message de réponse comprenant le GPSI ;
déterminer, sur la base du GPSI, de fournir ou non le service AKMA à l'UE ;
sur la base du fait que l'entité AF est autorisée à obtenir le service AKMA depuis l'entité AAnF et de la détermination de fournir le service AKMA à l'UE, dériver la clé d'application AKMA demandée pour l'UE (1200) à partir d'une clé d'ancrage AKMA, K_{AKMA} ; et
transmettre, à l'entité AF, un message de réponse comprenant la clé d'application AKMA dérivée.

2. Procédé de la revendication 1, dans lequel le message de réponse comprend en outre un temps d'expiration de la clé d'application AKMA.

3. Procédé de la revendication 1, dans lequel le message de demande de la clé d'application AKMA comprend en outre un identifiant de clé AKMA associé à l'UE (1200).

4. Procédé de la revendication 1, comprenant en outre :
dans le cas où l'entité AF n'est pas autorisée à obtenir le service AKMA depuis l'entité AAnF, rejeter le message de demande de la clé d'application AKMA.

5. Entité de fonction d'ancrage, AAnF, d'authentification et de gestion de clés pour les applications, AKMA, d'un système de communication sans fil, l'entité AAnF comprenant :
un émetteur-récepteur ; et
au moins un processeur couplé à l'émetteur-récepteur et configuré pour :
recevoir, depuis une entité de fonction d'application, AF, un message de demande d'une clé d'application AKMA pour un équipement utilisateur, UE (1200), dans lequel le message de demande de la clé d'application AKMA comprend un identifiant AF, ID, de l'entité AF ;
vérifier que l'entité AF est autorisée à obtenir un service AKMA auprès de l'entité AAnF, sur la base d'une politique locale configurée ou d'informations d'autorisation ;
transmettre, à une entité de gestion des données unifiées, UDM, un message de demande d'un identifiant public générique d'abonnement, GPSI, de l'UE (1200) ;
recevoir, depuis l'entité UDM, un message de réponse comprenant le GPSI ;
déterminer, sur la base du GPSI, s'il faut fournir le service AKMA à l'UE ;
sur la base du fait que l'entité AF est autorisée à obtenir le service AKMA depuis l'entité AAnF et de la détermination de fournir le service AKMA à l'UE, dériver la clé d'application AKMA demandée pour l'UE (1200) à partir d'une clé d'ancrage AKMA, K_{AKMA} ; et
transmettre, à l'entité AF, un message de réponse comprenant la clé d'application AKMA dérivée.

6. Entité AAnF de la revendication 5, dans laquelle le message de réponse comprend en outre un temps d'expiration de la clé d'application AKMA.

7. Entité AAnF de la revendication 5, dans laquelle le message de demande de la clé d'application AKMA comprend en outre un identifiant de clé AKMA associé à l'UE (1200).

8. Entité AAnF de la revendication 5, dans laquelle l'au moins un processeur est en outre configuré pour :
dans le cas où l'entité AF n'est pas autorisée à obtenir le service AKMA auprès de l'entité AAnF, rejeter le message de demande de la clé d'application AKMA.
